(19) Europäisches Patentamt
European Patent Office
Office européen des brevets

(11) **EP 2 419 795 B1**

(12) **EUROPÄISCHE PATENTSCHRIFT**

(45) Veröffentlichungstag und Bekanntmachung des Hinweises auf die Patenterteilung:
**19.08.2015 Patentblatt 2015/34**

(21) Anmeldenummer: **10710254.3**

(22) Anmeldetag: **05.03.2010**

(51) Int Cl.:
*G05B 13/04* (2006.01)     *G05D 1/08* (2006.01)

(86) Internationale Anmeldenummer:
**PCT/EP2010/052823**

(87) Internationale Veröffentlichungsnummer:
**WO 2010/118919 (21.10.2010 Gazette 2010/42)**

(54) **VERFAHREN ZUR BESTIMMUNG VON LOKALEN BESCHLEUNIGUNGEN, DYNAMISCHEN LASTVERTEILUNGEN UND AERODYNAMISCHEN DATEN BEI EINEM LUFTFAHRZEUG**

METHOD FOR DETERMINING LOCAL ACCELERATIONS, DYNAMIC LOAD DISTRIBUTIONS AND AERODYNAMIC DATA IN AN AIRCRAFT

PROCÉDÉ POUR DÉTERMINER DES ACCÉLÉRATIONS LOCALES, DES RÉPARTITIONS DE CHARGE DYNAMIQUES ET DES DONNÉES AÉRODYNAMIQUES SUR UN AÉRONEF

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **15.04.2009 DE 102009002392**
**15.04.2009 US 169507 P**

(43) Veröffentlichungstag der Anmeldung:
**22.02.2012 Patentblatt 2012/08**

(73) Patentinhaber: **Airbus Operations GmbH**
**21129 Hamburg (DE)**

(72) Erfinder:
• **KORDT, Michael**
**22587 Hamburg (DE)**
• **REIJERKERK, Marianne Jacoba**
**85764 Oberschleissheim (DE)**

(74) Vertreter: **Isarpatent**
**Patentanwälte Behnisch Barth Charles Hassa Peckmann & Partner mbB**
**Postfach 44 01 51**
**80750 München (DE)**

(56) Entgegenhaltungen:
**EP-A1- 1 607 325     DE-A1-102008 002 124**

• **OSA Y ET AL: "Synthesis of discrete time adaptive flight control system using nonlinear model matching" INDUSTRIAL ELECTRONICS, 2001. PROCEEDINGS. ISIE 2001. IEEE INTERNATION AL SYMPOSIUM ON JUNE 12-16, 2001, PISCATAWAY, NJ, USA,IEEE, PISCATAWAY, NJ, USA, Bd. 1, 12. Juni 2001 (2001-06-12), Seiten 58-63, XP010548979 ISBN: 978-0-7803-7090-6**

**Beschreibung**

Die Erfindung betrifft ein System und ein Verfahren zur integrierten Bestimmung von lokalen Beschleunigungen (als Indikator für Komfort und Passagiersicherheit), dynamischen Lastverteilungen und aerodynamischen Daten bei einem Luftfahrzeug, insbesondere bei einem Flugzeug, während des Fluges.

Luftfahrzeuge, wie beispielsweise Flugzeuge oder Helikopter, sind bei ihrem Flug verschiedenen Kräften ausgesetzt. Wesentliche Einflussgrößen sind dabei die von den Tragflächen erzeugten Auftriebskräfte, der aerodynamische Widerstand des Flugzeugs, die am Schwerpunkt des Flugzeugs angreifende Gewichtskraft bzw. Schwerkraft, die Systemkräfte, z.B. die vom Antriebssystem erzeugte Schubkraft oder die durch die Steuerflächen des Luftfahrzeugs bzw. durch die Bord- bzw. Antriebssysteme erzeugten Steuerkräfte sowie die durch die jeweiligen Kräfte hervorgerufenen Drehmomente. Bei der Gesamtkraftbilanz spielen auch die lokalen und globalen Masseneigenschaften, Strukturdämpfungen und -steifigkeiten der Flugzeugbauteile bzw. des Gesamtflugzeugs eine Rolle. Bei Flugmanövern und Luftturbulenzen führen die hier aufgeführten Kräfte in ihrer Gesamtbilanz zu Strukturlasten und Beschleunigungen an dem Luftfahrzeug. Diese Strukturlasten sind wesentlich für die Strukturdimensionierung des Flugzeugs. Die Beschleunigungen sind wesentlich für die Passagiersicherheit und den Komfort. Von den aufgeführten Kräften können mittels physikalisch-mathematischer Modelle und Methoden oder einfacher Boden- und Laborversuche sämtliche Kräfte mit einer Ausnahme ermittelt werden. Diese Ausnahme bilden die aerodynamischen Kräfte bzw. zugehörigen aerodynamischen Daten einschließlich ihrer örtlichen Verteilungen über das Flugzeug.

Daher besteht ein Bedarf nach einem Verfahren und einem System, das die Strukturlasten, Beschleunigungen und die aerodynamischen Daten integriert identifiziert.

Zur Vorhersage des Flugverhaltens eines Luftfahrzeugs können Gleichungssysteme verwendet werden, die aufgrund der Vielzahl von Zusammenhängen zwischen aeroelastischen und flugmechanischen Bewegungsgrößen relativ komplex sind. Herkömmliche Simulationssysteme zur Simulation des Verhaltens von Luftfahrzeugen beruhen auf weitgehend linearen Modellen der Strukturdynamik, der stationären und in-stationären Aerodynamik, Aeroelastik und der Flugmechanik.

Herkömmlicherweise werden aerodynamische Beiwerte und sonstige Modellparameter, wie beispielsweise Messfehler, Windböen etc. aus einem Flugversuchdatensatz bestimmt. Dieser Flugversuchdatensatz ist ein gespeicherter Zeitverlauf von Steuereingaben und Kenngrößen der daraus resultierenden Flugdynamik des Luftfahrzeugs. Die Kenntnis derartiger aerodynamischer Beiwerte ist zur Generierung von Simulationsmodellen erforderlich, die beispielsweise zur Ermittlung von Strukturlasten und lokalen Beschleunigungen eines Flugzeugs und damit zur Dimensionierung und Komfortoptimierung des Flugzeugs eingesetzt werden können. Weiterhin können diese Simulationsmodelle für Stabilitäts- und Komfortanalysen, für die Untersuchung von Flugeigenschaften oder für die Auslegung von Flugreglern herangezogen werden.

Bei der bisherigen Vorgehensweise werden aerodynamische Beiwerte für unterschiedliche Flugzeugtypen global ermittelt, das heißt lokale Lastverteilungen und lokale aerodynamische Verteilungen bleiben dabei unberücksichtigt. Herkömmliche Verfahren, die auf globalen aerodynamischen Beiwerten beruhen, sind daher relativ ungenau.

Die DE 10 2005 058 081 A1 beschreibt ein Verfahren zur Rekonstruktion von Böen- und Strukturlasten bei Flugzeugen. Dabei wird ein Beobachter auf der Grundlage eines nichtlinearen Modells des Flugzeugs erzeugt, um die Bedingungen des Flugzeugs in allen sechs Freiheitsgraden und die elastischen Bewegungen der Flugzeugstruktur zu beschreiben. Die für die Beschreibung des Zustandes des Flugzeugs wesentlichen Daten und Messungen werden dem Beobachter laufend zugeführt. Anschließend werden die Böengeschwindigkeiten und Strukturlasten, das heißt die Manöver und Böenlasten, mittels des Beobachters aus den zugeführten Daten und Messungen berechnet. Das in der DE 10 2005 058 081 A1 beschriebene Verfahren hat allerdings den Nachteil, dass keine aerodynamischen Daten, welche die wesentlichen Kraftbeiträge zur Lastverteilung beinhalten, er- bzw. übermittelt werden, so dass die physikalische Genauigkeit dieses herkömmlichen Verfahrens relativ gering ist, insbesondere wenn man es, wie das hier entwickelte System, zur systematischen physikalischen Strukturlastenidentifikation bei Beginn einer Flugerprobung eines neuen Flugzeugtyps einsetzen würde. Das Verfahren der DE 10 2005 058 081 A1 wird erprobt und eingesetzt, wenn die normale Flugerprobung abgeschlossen ist und die aerodynamischen Daten hinreichend genau bekannt sind. Im Gegensatz dazu kann das verfahren gemäß der vorliegenden Erfindung insbesondere zu Beginn der Erprobung eingesetzt werden und hochgenau die aerodynamischen Daten zusammen mit den Strukturlasten und -beschleunigungen ermitteln, so dass sämtliche physikalischen Kraftbeiträge zu den Strukturlasten und -beschleunigungen genau bekannt sind.

Es ist daher eine Aufgabe der vorliegenden Erfindung ein Verfahren zur Bestimmung von aerodynamischen Daten und dynamischen Lastverteilungen bei einem Luftfahrzeug zu schaffen, die lokale Kraft- und Momentenverteilungen berücksichtigen und eine hohe Genauigkeit aufweisen.

Diese Aufgabe wird erfindungsgemäß durch ein Verfahren mit den im Patentanspruch 1 angegebenen Merkmalen gelöst.

Das Verfahren gemäß der vorliegenden Erfindung und das in der DE 10 2005 058 081 A1 beschriebene Verfahren können kombiniert werden, indem mit dem Verfahren gemäß der vorliegenden Erfindung die aerodynamischen Daten zusammen mit den Strukturlasten bestmöglich identifiziert werden und mit diesem Modell ein physikalischer Beobachter für das System der DE 10 2005 058 081 A1 aufgebaut wird, der mit minimalem Validierungsaufwand im Serienflugzeug zur Strukturlastüberwachung eingesetzt werden kann.

Die Erfindung schafft ein Verfahren zur integrierten Bestimmung von aerodynamischen Daten und dynamischen Lastverteilungen bei einem Luftfahrzeug während des Fluges mit:

Sensoren zur direkten oder indirekten Erfassung von aerodynamischen Parametern des Luftfahrzeugs, und mit einer Berechnungseinheit, die auf Basis eines nicht-linearen Simulationsmodells des Luftfahrzeugs die aerodynamischen Daten und die dynamischen Lastverteilungen des Luftfahrzeugs in Abhängigkeit von den erfassten aerodynamischen Parametern des Luftfahrzeugs berechnet.

Das erfindungsgemäße Verfahren ermöglicht es Linien-, Flugversuchs- und Simulatorpiloten sowie Flugversuchs-, Telemetrie- und Entwicklungsingenieuren unter Nutzung eines aus Sensoren bestehenden Sensorsystems sämtliche aerodynamischen Daten und Zeitverläufe von allen aus diesen aerodynamischen Daten resultierenden Lasten mit hoher Genauigkeit bereit zu stellen. Die Bereitstellung dieser aerodynamischen Daten- und Zeitverläufe kann bei einer möglichen Ausführungsform in Echtzeit erfolgen.

Das erfindungsgemäße Verfahren zur integrierten Bestimmung von aerodynamischen Daten und dynamischen Lastverteilungen bei einem Luftfahrzeug ermöglicht sowohl eine Luftfahrzeugdesignoptimierung als auch ein gezieltes Pilotentraining zur Vermeidung von Spitzenlasten bei extremen Flugsituationen oder Flugmanövern, zur Reduktion von Ermüdungslasten an dem Luftfahrzeug sowie zur Vermeidung von vibrationskritischen Zuständen. Weiterhin kann das Luftfahrzeug dahingehend optimiert werden bzw. der Pilot in der Weise trainiert werden, dass eine Reduktion von Beschleunigungskräften im gesamten Kabinenbereich zur Erhöhung der Passagier- und Crewsicherheit und des Passagierkomforts erreicht wird.

Das erfindungsgemäße Verfahren zur integrierten Bestimmung von aerodynamischen Daten und dynamischen Lastverteilungen bei einem Luftfahrzeug bietet zudem Flugversuchspiloten sowie dem Flugversuchs-, Telemetrie- und Entwicklungsingenieuren den Vorteil, dass der Aufwand bei der Flugerprobung eines Luftfahrzeugs zur Freigabe eines zulässigen Flugbereichs minimiert werden kann.

Bei dem erfindungsgemäßen Verfahren zur Bestimmung aerodynamischer Daten beschreiben diese Daten eine Wechselwirkung zwischen der Struktur des Luftfahrzeugs und der umgebenden Strömung. Diese aerodynamischen Daten umfassen lokale und globale Kräfte und Momente.

Die Erfassung von aerodynamischen Parametern des Luftfahrzeugs erfolgt über Sensoren direkt oder indirekt. Bei diesen sensorisch erfassten aerodynamischen Parametern handelt es sich um Messgrößen, wie beispielsweise Kräfte, Beschleunigungen, Drücke, Momente oder auch um Deformationen und Dehnungen von Bauteilen bzw. Komponenten des Luftfahrzeugs. Die Vielzahl der unterschiedlichen Messgrößen bzw. der aerodynamischen Parameter bilden einen Parametervektor. Die sensorische Erfassung eines aerodynamischen Parameters des Parametervektors kann entweder direkt oder indirekt erfolgen. Bei der indirekten Erfassung wird der jeweilige aerodynamische Parameter mittels eines vorgegebenen Gleichungssystems aus anderen sensorisch erfassten Messgrößen berechnet.

Im Weiteren werden Ausführungsformen des erfindungsgemäßen Verfahrens zur integrierten Bestimmung von aerodynamischen Daten und Lastverteilungen bei einem Luftfahrzeug unter Bezugnahme auf die beigefügten Figuren beschrieben.

Es zeigen:

Figur 1          Koordinatensysteme eines bei dem erfindungsgemäßen Verfahren eingesetzten nichtlinearen Simulationsmodells eines Luftfahrzeugs;

Figur 2          ein Blockschaltbild einer möglichen Ausführungsform des erfindungsgemäßen Systems zur integrierten Bestimmung von aerodynamischen Daten;

Figur 3          ein einfaches Ablaufdiagramm einer möglichen Ausführungsform des erfindungsgemäßen Verfahrens zur Bestimmung von aerodynamischen Daten und dynamischen Lastverteilungen;

Figur 4          ein Diagramm zur Erläuterung des erfindungsgemäßen Verfahrens;

Figuren 5A, 5B          Diagramme zur Erläuterung des dem erfindungsgemäßen System zugrundeliegenden nichtlinearen Simulationsmodells eines Luftfahrzeugs;

Figuren 6A, 6B, 6C, 6D          Sonderfälle des dem erfindungsgemäßen System zugrundeliegenden nichtlinearen Simulationsmodells;

Figuren 7 und 8 ein Beispiel möglicher Ausgaben des erfindungsgemäßen Systems.

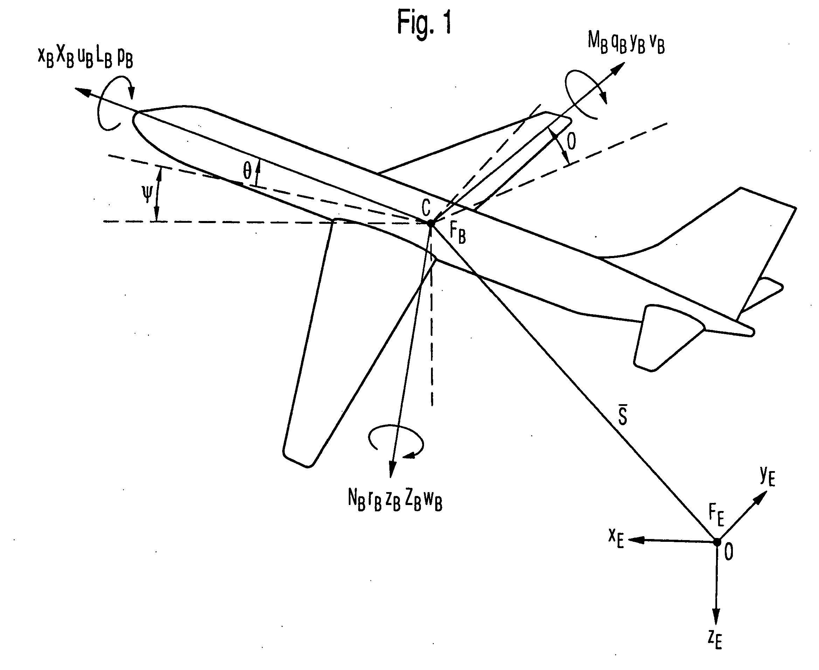

Wie man aus Fig. 1 erkennen kann, lassen sich die Bewegungen eines Flugzeugs anhand von Kenngrößen beschreiben. Die Flugmechanik beschreibt dabei das Verhalten eines Luftfahrzeugs, das sich in der Atmosphäre mit Hilfe der Aerodynamik bewegt. Die Flugmechanik beschreibt das Verhalten des Gesamtsystems beziehungsweise des Luftfahrzeugs, wobei eine Position, Fluglage und Fluggeschwindigkeit eines Flugkörpers zu einem beliebigen Zeitpunkt berechnet wird. Dies geschieht mit Hilfe von Bewegungsgleichungen, die ein Gleichungssystem von gekoppelten Differenzialgleichungen bilden. Aufgrund von Flugmanövern und Luftturbulenzen treten an einem Luftfahrzeug Manöverlasten und Strukturlasten auf. Manöverlasten lassen sich mittels nichtlinearer Bewegungsgleichungen beschreiben und basieren auf Datenbanken, die aerodynamische Kräfte angeben. Insbesondere bei großen Luftfahrzeugen müssen neben nichtlinearen Bewegungen auch die elastischen Verformungen ihrer Struktur berücksichtigt werden.

Die Bewegung eines starren Flugzeugs kann durch Systemgrößen beschrieben werden. Jeweils drei dieser Größen werden zu einem Vektor zusammengefasst und beschreiben die Position:

$$\vec{S} = \begin{bmatrix} x & y & z \end{bmatrix}^T \tag{1}$$

Winkellage (Eulerwinkel):

$$\vec{\Phi} = \begin{bmatrix} \phi \\ \theta \\ \psi \end{bmatrix} \quad \begin{matrix} \texttt{Hängewinkel (Rollwinkel)} \\ \texttt{Längsneigung (Nickwinkel)} \\ \texttt{Steuerkurs (Gierwinkel)} \end{matrix} \tag{2}$$

Geschwindigkeit:

$$\vec{V} = \begin{bmatrix} u & v & w \end{bmatrix}^T \tag{3}$$

Winkelgeschwindigkeit:

$$\vec{\Omega} = \begin{bmatrix} p \\ q \\ r \end{bmatrix} \quad \begin{matrix} \text{Rollrate} \\ \text{Nickrate} \\ \text{Gierrate} \end{matrix} \tag{4}$$

Ursache der Bewegung sind die auf das Flugzeug wirkenden Kräfte,
[0025] Gewicht:

$$\vec{G} = \begin{bmatrix} G_x & G_y & G_z \end{bmatrix}^T \tag{5}$$

Schub und aerodynamische Kräfte sowie deren Momente, deren Resultierende in den Vektoren
Kraft:

$$\vec{R} = \begin{bmatrix} X & Y & Z \end{bmatrix}^T \tag{6}$$

Moment:

$$\vec{Q} = \begin{bmatrix} L & M & N \end{bmatrix}^T \qquad (7)$$

zusammengefasst werden. Eine weitere wichtige Größe ist die von den Beschleunigungsmessern gemessene spezifische Kraft.

$$\vec{b} = \begin{bmatrix} b_x & b_y & b_z \end{bmatrix}^T \qquad (8)$$

Die spezifische Kraft ist ein Maß für den Beschleunigungseindruck des Piloten nach Größe und Richtung und ist definiert als das Verhältnis der resultierenden äußeren Kraft zur Flugzeugmasse.

Für die Ermittlung der Newton'schen Gleichungen sowie der Drallgleichung werden die Beschleunigungen und Geschwindigkeiten bezüglich eines Inertialsystems gemessen. Die Erde dient als Inertialsystem, wobei ein erdfestes Koordinatensystem $F_E$ definiert wird, bei dem die z-Achse in Richtung Erdmittelpunkt zeigt. x- und y-Achse werden derart gewählt, dass ein Rechtssystem entsteht. Das Achsenkreuz kann z. B. zum magnetischen Nordpunkt ausgerichtet werden. Bei der Auswertung der Drallgleichung erweist es sich als vorteilhaft, ein körperfestes Koordinatensystem $F_B$ zu verwenden, da dann der Trägheitstensor konstant ist. Für die Festlegung der Achsen des körperfesten Koordinatensystems gibt es verschiedene Ansätze, wobei der Ursprung jeweils in dem Schwerpunkt C des Luftfahrzeugs liegt. Das Hauptachsensystem wird so gelegt, dass die x-Achse in Richtung der Längsachse des Flugzeugs und die z-Achse senkrecht dazu nach unten zeigt. Cy wird so gewählt, dass ein Rechtssystem entsteht. Werden die Stabilitätsachsen gewählt, zeigt die x-Achse in Richtung der Fluggeschwindigkeit. Die anderen beiden Achsen werden analog den Hauptachsen festgelegt. Die wesentlichen Größen sowie die relative Lage von flug- und erdfestem Koordinatensystem zeigt Fig. 1.

Zur einfachen Beschreibung der aerodynamischen Kräfte wird ein aerodynamisches Koordinatensystem $F_A$ gewählt, dessen Ursprung ebenfalls im Schwerpunkt C des Luftfahrzeugs liegt. Die x-Achse dieses Koordinatensystems liegt in Richtung der negativen Anströmgeschwindigkeit, die z-Achse in Richtung des negativen Auftriebs. Die y-Achse wird analog der vorherigen Betrachtungen gewählt. Dieses Koordinatensystem erhält man dadurch, dass man das körperfeste Hauptachsensystem um einen Anstellwinkel $\alpha$ um seine y-Achse und anschließend um einen Schiebewinkel $\beta$ um die z-Achse dreht. Das aerodynamische Koordinatensystem $F_A$ ist nur in stationären Flugzuständen des Luftfahrzeugs körperfest.

Der Übergang vom körperfesten zum erdfesten Koordinatensystem geschieht mit Hilfe einer Transformationsmatrix $\underline{L}_{EB}$

$$\underline{L}_{EB} = \begin{bmatrix} \cos\theta\,\cos\psi & \sin\phi\,\sin\theta\,\cos\psi - \cos\phi\,\sin\psi & \cos\phi\,\sin\phi\,\cos\psi + \sin\phi\,\cos\psi \\ \cos\theta\,\sin\psi & \sin\phi\,\sin\theta\,\sin\psi + \cos\phi\,\cos\psi & \cos\phi\,\sin\theta\,\sin\psi - \sin\phi\,\cos\psi \\ -\sin\theta & \sin\phi\,\cos\theta & \cos\phi\,\cos\theta \end{bmatrix} \qquad (9)$$

Der tiefergestellte Index gibt das Koordinatensystem an, in dem die Vektoren dargestellt werden. Man erhält z. B. den Vektor $\vec{R}_E$ im erdfesten Koordinatensystem $F_E$ aus dem in körperfesten Koordinaten dargestellten Vektor $\vec{R}_B$ mit:

$$\vec{R}_E = \underline{L}_{EB}\,\vec{R}_B \qquad (10)$$

Zur Vereinfachung der Schreibweise wird der Index B, wenn nicht unbedingt notwendig, im Folgenden weggelassen.

Bei der Geschwindigkeit muss zusätzlich zwischen Wind und Windstille unterschieden werden. Allgemein gilt mit dem Geschwindigkeitsadditionsgesetz:

$$\vec{V}_E^E = \vec{V}_E^B + \vec{W}_E \qquad (11)$$

wobei der hochgestellte Index das Bezugssystem festlegt, in dem die entsprechenden Geschwindigkeiten gemessen werden. $\vec{W}_E$ ist die Windgeschwindigkeit, die zu Null angenommen werden kann. Damit sind die Beträge in beiden Bezugssystemen gleich und der hochgestellte Index kann weggelassen werden.

Mit den Komponenten der Vektoren $\vec{V}$, $\vec{\Omega}$ und $\vec{\Phi}$ als Zustandsgrößen erhält man die Bewegungsgleichungen im Zustandsraum bei Windstille aus der Newton'schen Gleichung und der Drallgleichung, sowie der Beziehung zwischen den Eulerwinkeln und ihren Raten. Die Gleichungen gelten insbesondere, wenn man die Erde als Inertialsystem mit homogenem Gravitationsfeld betrachtet und das Flugzeug bzw. Luftfahrzeug symmetrisch bezüglich seiner x-z-Ebene ist. Die auftretenden Kräfte greifen modellgemäß im Schwerpunkt an und die Erzeugung aerodynamischer Kräfte ist quasistationär.

Die Newton'sche Gleichung für den Flugzeugschwerpunkt in erdfesten Koordinaten lautet:

$$\vec{F}_E = m\,\dot{\vec{V}}_E \qquad\qquad (12)$$

Diese wird mit der Transformationsmatrix $\underline{L}_{EB}$ in das körperfeste Koordinatensystem transformiert.

$$\underline{L}_{EB}\,\vec{F} = m\frac{d}{dt}\left(\underline{L}_{EB}\,\vec{V}\right)$$
$$= m\left(\underline{\dot{L}}_{EB}\,\vec{V} + \underline{L}_{EB}\,\dot{\vec{V}}\right) \qquad\qquad (13)$$

Es gilt:

$$\qquad\qquad (14)$$

$$\underline{\dot{L}}_{EB}\vec{V} = \underline{L}_{EB}\left(\vec{\Omega}\times\vec{V}\right)$$

woraus folgt:

$$\underline{L}_{EB}\vec{F} = \underline{L}_{EB}\,m\left(\vec{\Omega}\times\vec{V} + \dot{\vec{V}}\right) \qquad\qquad (15)$$

Die resultierende Kraft F setzt sich aus der aerodynamischen Kraft $\vec{R}$ und der Gewichtskraft $\vec{G} = \underline{L}_{EB}^{-1}\vec{G}_E$ zusammen. Diese Beziehungen werden in obige Gleichung eingesetzt und anschließend nach V aufgelöst.

$$\dot{\vec{V}} = \frac{1}{m}\left(\vec{R} + \underline{L}_{EB}^{-1}\,\vec{G}_E\right) - \vec{\Omega}\times\vec{V} \qquad\qquad (16)$$

Damit liegen die Gleichungen für die Geschwindigkeiten fest. Die Beziehungen für die Raten erhält man analog aus der Drallgleichung mit dem Drall H sowie dem Trägheitstensor $\underline{I}$:

$$\vec{Q}_E = \dot{\vec{H}}_E$$
$$\underline{L}_{EB}\,\vec{Q} = \frac{d}{dt}\left(\underline{L}_{EB}\vec{H}_E\right)$$
$$= \dot{\underline{L}}_{EB}\,\vec{H} + \underline{L}_{EB}\,\dot{\vec{H}} \qquad\qquad (17)$$
$$= \underline{L}_{EB}\left(\vec{\Omega}\times\underline{I}\,\vec{\Omega} + \underline{I}\,\dot{\vec{\Omega}}\right)$$
$$\dot{\vec{\Omega}} = \underline{I}^{-1}\vec{Q} - \underline{I}^{-1}\vec{\Omega}\times\underline{I}\,\vec{\Omega}$$

Diese Beziehungen in Komponenten aufgespalten ergeben zusammen mit den Gleichungen zwischen Eulerwinkeln und ihren Raten die Zustandsgleichungen eines starren Luftfahrzeugs.

$$\dot{u} = \frac{1}{m}X - g\,\sin\theta - qw + rv$$

$$\dot{v} = \frac{1}{m}Y + g\,\cos\theta\,\sin\phi - ru + pw$$

$$\dot{w} = \frac{1}{m}Z + g\,\cos\theta\,\cos\phi - pv + qu$$

$$\dot{p} = \frac{1}{I_z I_x - I_{zx}^2}\left[qr\left(I_y I_z - I_z^2 - I_{zx}^2\right) + qpI_{zx}(I_z + I_x - I_y) + LI_z + NI_{zx}\right]$$

$$\dot{q} = \frac{1}{I_y}\left[rp(I_z - I_x) + I_{zx}\left(r^2 - p^2\right) + M\right]$$

$$\dot{r} = \frac{1}{I_z I_x - I_{zx}^2}\left[qr\,I_{zx}(I_y - I_z - I_x) + qp\left(I_{zx}^2 + I_x^2 - I_x I_y\right) + LI_{zx} + NI_x\right]$$

$$\dot{\phi} = p + (q\,\sin\phi + r\,\cos\phi)\tan\theta$$

$$\dot{\theta} = q\,\cos\phi - r\,\sin\phi$$

$$\dot{\psi} = \frac{1}{\cos\theta}(q\,\sin\phi + r\,\cos\phi)$$

$$(18)$$

Durch Transformation der Geschwindigkeit $\vec{V}$ in das erdfeste Koordinatensystem mit

$$\vec{V}_E = \underline{L}_{EB}\,\vec{V} \qquad (19)$$

erhält man die Differentialgleichungen zur Berechnung der Position:

$$\dot{x}_E = u\,\cos\theta\,\cos\psi + v\,(\sin\phi\,\sin\theta\,\cos\psi - \cos\phi\,\sin\psi) +$$
$$w\,(\cos\phi\,\sin\theta\,\cos\psi + \sin\phi\,\sin\psi)$$
$$\dot{y}_E = u\,\cos\theta\,\sin\psi + v\,(\sin\phi\,\sin\theta\,\sin\psi + \cos\phi\,\cos\psi) + \qquad (20)$$
$$w\,(\cos\phi\,\sin\theta\,\sin\psi - \sin\phi\,\cos\psi)$$
$$\dot{z}_E = -u\,\sin\theta + v\,\sin\phi\,\cos\theta + w\,\cos\phi\,\cos\theta$$

Für die spezifische Kraft erhält man in körperfesten Koordinaten für einen auf der x-Achse im Abstand $x_p$ vom Schwerpunkt liegenden Sensor:

$$\begin{bmatrix} b_x \\ b_y \\ b_z \end{bmatrix} = \begin{bmatrix} \dot{u} \\ \dot{v} \\ \dot{w} \end{bmatrix} - g\begin{bmatrix} -\sin\theta \\ \sin\phi\,\cos\theta \\ \cos\phi\,\cos\theta \end{bmatrix} + x_p\begin{bmatrix} -(q^2 + r^2) \\ \dot{r} \\ -\dot{q} \end{bmatrix} \qquad (21)$$

Teilt man die Vektoreinträge durch die Erdbeschleunigung $g = 9,81\,\dfrac{m}{s}$ ergibt sich der spezifische Lastfaktor s $n_x = b_x\,/\,g$, $n_y = b_y\,/\,g$, $n_z = b_z\,/\,g$.

Die obigen Bewegungsgleichungen gelten für ein ideal starres Flugzeug. In der Praxis treten jedoch elastische Verformungen der Struktur auf, die die dynamischen Eigenschaften des Systems merklich beeinflussen. Das Modell wird daher um diese elastischen Freiheitsgrade erweitert. Quasistatische Verformungen sind gegeben, wenn die Eigenfrequenzen der elastischen Moden wesentlich höher sind, als die der Starrkörpermoden. In diesem Fall kann der Einfluss der elastischen Verformung durch entsprechende Adaption der aerodynamischen Derivativen berücksichtigt werden.

Liegen die Eigenfrequenzen der elastischen Freiheitsgrade im gleichen Bereich, wird die Bewegung des Starrkörpers durch die elastischen Verformungen beeinflusst. In diesem Fall ist die Dynamik der elastischen Freiheitsgrade in den Bewegungsgleichungen zu berücksichtigen. Hierzu geht man zu einer diskreten Modellierung der kontinuierlichen Flugzugstruktur über, mit einer großen aber endlichen Anzahl von Orten, die mit dem Index i durchnummeriert werden können. Die Verformungen der Struktur an jedem Ort i (im Sinne einer Finite Element Modellierung) des Flugzeugs und die hiermit verbundenen Beschleunigungen können näherungsweise durch Superposition von Normalmoden der freien Schwingung beschrieben werden:

$$x_i'(t) = \sum_{n=1}^{\infty} f_{i,n}(x_{i,0}, y_{i,0}, z_{i,0}) \varepsilon_n(t)$$

$$y_i'(t) = \sum_{n=1}^{\infty} g_{i,n}(x_{i,0}, y_{i,0}, z_{i,0}) \varepsilon_n(t) \quad (22)$$

$$z_i'(t) = \sum_{n=1}^{\infty} h_{i,n}(x_{i,0}, y_{i,0}, z_{i,0}) \varepsilon_n(t)$$

$$\ddot{x}_i'(t) = \sum_{n=1}^{\infty} f_{i,n}(x_{i,0}, y_{i,0}, z_{i,0}) \ddot{\varepsilon}_n(t)$$

$$\ddot{y}_i'(t) = \sum_{n=1}^{\infty} g_{i,n}(x_{i,0}, y_{i,0}, z_{i,0}) \ddot{\varepsilon}_n(t)$$

$$\ddot{z}_i'(t) = \sum_{n=1}^{\infty} h_{i,n}(x_{i,0}, y_{i,0}, z_{i,0}) \ddot{\varepsilon}_n(t)$$

$x_i'$, $y_i'$, $z_i'$ sind die Auslenkungen von den jeweiligen Ruhelagen $x_{i,0}$, $y_{i,0}$, $z_0$ ;
$\ddot{x}_i'$, $\ddot{y}_i'$, $\ddot{z}_i'$ sind die zugehörigen Beschleunigungen;
$f_{i,n}$, $g_{i,n}$ sowie $h_{i,n}$ die Modenformfunktionen und $\varepsilon_n$ die generalisierten Koordinaten oder verallgemeinerten Modenauslenkungen und entsprechend $\ddot{\varepsilon}_n$ die zugehörigen verallgemeinerten Modenbeschleunigungen.
Wertet man $x_i'$, $y_i'$, $z_i'$ oder $\ddot{x}_i'$, $\ddot{y}_i'$, $\ddot{z}_i'$ für alle Indizes $i$ aus, die zu einem Flugzeugteilbereich oder einer -komponente gehören, so erhält man die Auslenkungs- und Beschleunigungsverteilung für einen Flugzeugteilbereich oder eine -komponente.

Die zusätzlichen Bewegungsgleichungen für jeden Mode $\varepsilon_n$ erhält man aus der Gleichung von Lagrange als Gleichungen erzwungener Schwingungen. Für den Mode $\varepsilon_n$ gilt mit der Eigenfrequenz $\omega_n$ der Dämpfung $d_n$ und dem verallgemeinerten Trägheitsmoment In näherungsweise

$$\ddot{\varepsilon}_n + 2d_n \omega_n \dot{\varepsilon} + \omega_n^2 \varepsilon_n = \frac{F_n}{I_n} \quad (23)$$

Die Näherung besteht darin, sämtliche Kopplungen über die Dämpfungsterme zwischen den einzelnen Moden zu vernachlässigen. Unter der Voraussetzung, dass der Einfluss der Freiheitsgrade des Starrkörpers auf die elastischen Moden durch einen linearen Zusammenhang beschrieben werden kann und die elastischen Verformungen hinreichend klein sind, wird die verallgemeinerte Kraft $F_n$ als eine Linearkombination aus Zustands- und Eingangsgrößen dargestellt:

$$F_n = a_{nu} \Delta u + a_{n\dot{u}} \dot{u} + ... + a_{np} p + ... + a_{n\delta_r} \delta_r + ...$$

$$+ \sum_{j=1}^{\infty} a_{nj} \varepsilon_j + \sum_{j=1}^{\infty} b_{nj} \dot{\varepsilon}_j + \sum_{j=1}^{\infty} c_{nj} \ddot{\varepsilon}_j \quad (24)$$

Die hier auftretenden unendlichen Reihen können durch endliche Reihen ersetzt werden, die nur jene Moden beibehalten, die im Bereich der Starrkörperfrequenzen liegen. Für die weitere Berechnung kann angenommen werden, dass dies k Moden sind, die in einem Vektor $\underline{\varepsilon}$ zusammengefasst werden. Die Gleichung (24) kann somit in der folgenden Form geschrieben werden:

$$
\begin{aligned}
F_n = {} & a_{nu}\,\Delta u + a_{n\dot{u}}\,\dot{u} + \ldots + a_{np}\,p + \ldots + a_{n\delta_r}\,\delta_r + \ldots \\
& + \sum_{j=1}^{k} a_{nj}\,\varepsilon_j + \sum_{j=1}^{k} b_{nj}\,\dot{\varepsilon}_j + \sum_{j=1}^{k} c_{nj}\,\ddot{\varepsilon}_j \\
= {} & a_{nu}\,\Delta u + a_{n\dot{u}}\,\dot{u} + \ldots + a_{np}\,p + \ldots + a_{n\delta_r}\,\delta_r + \ldots + \underline{a}_{n\varepsilon}^{T}\underline{\varepsilon} + \underline{b}_{n\dot{\varepsilon}}^{T}\underline{\dot{\varepsilon}} + \underline{c}_{n\ddot{\varepsilon}}^{T}\underline{\ddot{\varepsilon}}
\end{aligned}
\tag{25}
$$

Um zu einer kompakten Schreibweise für sämtliche Moden zu gelangen, werden die verallgemeinerten Trägheitsmomente $I_n$ in der Diagonalmatrix $\underline{I}$, die skalaren Kopplungen jeweils in Vektoren und die vektoriellen Koppelterme in Matrizen zusammengefasst. Damit kann Gleichung (24) für sämtliche Moden formuliert werden.

$$
\begin{aligned}
\underline{\ddot{\varepsilon}} + 2\underline{d}\,\underline{\omega}^{T}\underline{\dot{\varepsilon}} + \underline{\omega}\,\underline{\omega}^{T}\underline{\varepsilon} = {} & \underline{I}^{-1}\big(\,\underline{a}_u\,\Delta u + \underline{a}_{\dot{u}}\,\dot{u} + \ldots + \underline{a}_p\,p + \ldots + \underline{a}_{\delta_r}\,\delta_r + \ldots \\
& + \underline{A}_{\varepsilon}\,\underline{\varepsilon} + \underline{B}_{\dot{\varepsilon}}\,\underline{\dot{\varepsilon}} + \underline{C}_{\ddot{\varepsilon}}\,\underline{\ddot{\varepsilon}}\,\big)
\end{aligned}
\tag{26}
$$

Zur Darstellung im Zustandsraum gelangt man durch Einführen der Modengeschwindigkeit $\underline{\dot{\varepsilon}}=\underline{v}$. Diese wird in Gleichung (26) eingesetzt:

$$
\begin{aligned}
& \underline{\dot{v}} + 2\underline{d}\,\underline{\omega}^{T}\underline{v} + \underline{\omega}\,\underline{\omega}^{T}\underline{\varepsilon} = \\
& \underline{I}^{-1}\big(\underline{a}_u\,\Delta u + \underline{a}_{\dot{u}}\,\dot{u} + \ldots + \underline{a}_p\,p + \ldots + \underline{a}_{\delta_r}\,\delta_r + \ldots + \underline{A}_{\varepsilon}\,\underline{\varepsilon} + \underline{B}_v\,\underline{v} + \underline{C}_{\dot{v}}\,\underline{\dot{v}}\big)
\end{aligned}
\tag{27}
$$

Unter Verwendung der Matrizen

$$
\tag{28}
$$

$$
\underline{A}_{\dot{x}_1} = \begin{bmatrix} \underline{a}_{\dot{u}} & \underline{a}_{\dot{v}} & \underline{a}_{\dot{w}} & \underline{a}_{\dot{p}} & \underline{a}_{\dot{q}} & \underline{a}_{\dot{r}} \end{bmatrix},
$$

$$
\underline{A}_{x_1} = \begin{bmatrix} \underline{a}_{u} & \underline{a}_{v} & \underline{a}_{w} & \underline{a}_{p} & \underline{a}_{q} & \underline{a}_{r} \end{bmatrix},
$$

$$
\underline{A}_{c} = \begin{bmatrix} \underline{a}_{\delta_E} & \underline{a}_{\delta_A} & \underline{a}_{\delta_R} & \underline{a}_{\delta_C} & \underline{a}_{\delta_F} \end{bmatrix},
$$

sowie der Einheitsmatrix k-ter Ordnung $\underline{I}_k$ kann die Zustandsgleichung formuliert werden:

$$
\begin{aligned}
& \underline{\dot{\varepsilon}} = \underline{v} \\
& \underline{\dot{v}} = \big(\underline{I}_k - \underline{I}^{-1}\underline{C}_v\big)^{-1}\Big[\big(\underline{I}^{-1}\underline{B}_v - 2\underline{d}\,\underline{\omega}^{T}\big)\underline{v} + \big(\underline{I}^{-1}\underline{A}_{\varepsilon} - \underline{\omega}\,\underline{\omega}^{T}\big)\underline{\varepsilon} + \underline{A}_{\dot{x}_1}\underline{\dot{x}}_1 + \underline{A}_{x_1}\underline{x}_1 + \underline{A}_{c}\underline{c}\Big]
\end{aligned}
\tag{29}
$$

Die äußeren, an einem Luftfahrzeug angreifenden Kräfte sind neben dem Gewicht die aerodynamischen Kräfte Auftrieb und Widerstand sowie der Schub. Der Angriffspunkt des Auftriebs liegt im sogenannten Neutralpunkt, der vom Schwerpunkt verschieden ist. Dadurch werden Momente erzeugt. Ähnliches gilt für den Schub. Die resultierenden Kräfte werden in einem Vektor $\vec{R}$, die Momente in einem Vektor $\vec{Q}$ zusammengefasst. Auftrieb und Widerstand werden durch die Relativbewegung von Luftfahrzeug und Luft also durch $\vec{V}$ und $\vec{\Omega}$ erzeugt. Diese Kräfte hängen weiterhin vom An-

stellwinkel $\alpha$ und den Winkeln der Steuerflächen der primären Flugsteuerung, Höhen- $(\delta_E)$, Quer- $(\delta_A)$ und Seitenruder $(\delta_R)$ ab. Je nach Flugzeugtyp werden weitere Steuerflächen, Störklappen, Spoiler, Canards eingesetzt, die im Folgenden mit $\delta_c$ bezeichnet werden. Die Winkel der Steuerflächen werden zusammen mit dem Schub $\delta_F$ in einem Steuervektor $\underline{c}$ zusammengefasst. Die aerodynamischen Wirkungen beruhen auf nichtlinearen Zusammenhängen. Sie lassen sich durch Taylorreihen beschreiben, die nach einer bestimmten Ordnung abgebrochen werden. Die Koeffizienten der Glieder zweiter und dritter Ordnung liegen um ein bis zwei Größenordnungen unterhalb der Koeffizienten erster Ordnung. Bleibt der Anstellwinkel unterhalb 10°, können die Terme höherer Ordnung vernachlässigt werden. Ausgangspunkt des linearen Ansatzes ist ein stationärer Flugzustand. Die Geschwindigkeiten und Raten sowie Kräfte und Momente werden in einen stationären Term und einen Störterm aufgespalten:

$$
\begin{aligned}
u &= u_0 + \Delta u & X &= X_0 + \Delta X & p &= p_0 + \Delta p & L &= L_0 + \Delta L \\
v &= v_0 + \Delta v & Y &= Y_0 + \Delta Y & q &= q_0 + \Delta q & M &= M_0 + \Delta M \\
w &= w_0 + \Delta w & Z &= Z_0 + \Delta Z & r &= r_0 + \Delta r & N &= N_0 + \Delta N
\end{aligned}
\qquad (30)
$$

Als stationärer Flugzustand kann der horizontale symmetrische Geradeausflug gewählt werden. Wählt man zusätzlich als flugfestes Koordinatensystem die Stabilitätsachsen, vereinfachen sich die obigen Beziehungen dadurch, dass in diesem Zustand $X_0 = Y_0 = L_0 = M_0 = N_0 = 0$ und $w_0 = u_0 = p_0 = q_0 = r_0 = 0$ gilt. Da bei horizontalem Flug die $z$-Achsen von flug- und erdfestem Koordinatensystem parallel sind, ergibt sich $z_0 = -mg$. Weiterhin gilt näherungsweise $w \approx u_0\,\alpha$.

$$
\begin{bmatrix} X \\ Z \\ M \\ Y \\ L \\ N \end{bmatrix}
=
\begin{bmatrix} 0 \\ -mg \\ 0 \\ 0 \\ 0 \\ 0 \end{bmatrix}
+
\begin{bmatrix}
X_u & X_w & X_{\dot w} & X_q & 0 & 0 & 0 & 0 & \underline{X_\varepsilon} & \underline{X_v} & \underline{X_c} \\
Z_u & Z_w & Z_{\dot w} & Z_q & 0 & 0 & 0 & 0 & \underline{Z_\varepsilon} & \underline{Z_v} & \underline{Z_c} \\
M_u & M_w & M_{\dot w} & M_q & 0 & 0 & 0 & 0 & \underline{M_\varepsilon} & \underline{M_v} & \underline{M_c} \\
0 & 0 & 0 & 0 & Y_v & Y_{\dot v} & Y_p & Y_r & \underline{Y_\varepsilon} & \underline{Y_v} & \underline{Y_c} \\
0 & 0 & 0 & 0 & L_v & L_{\dot v} & L_p & L_r & \underline{L_\varepsilon} & \underline{L_v} & \underline{L_c} \\
0 & 0 & 0 & 0 & N_v & N_{\dot v} & N_p & N_r & \underline{N_\varepsilon} & \underline{N_v} & \underline{N_c}
\end{bmatrix}
\begin{bmatrix} \Delta u \\ w \\ \dot w \\ q \\ v \\ \dot v \\ p \\ r \\ \underline{\varepsilon} \\ \underline{v} \\ \underline{c} \end{bmatrix}
\qquad (31)
$$

Die in Gleichung (31) auftretenden mit $v$ und $\varepsilon$ indizierten Größen beschreiben den Einfluss der elastischen Moden auf die Aerodynamik. Es sind jeweils Vektoren der Länge k, wobei k die Anzahl der elastischen Moden ist. Die mit c indizierten Derivative sind ebenfalls Vektoren, die den Einfluss der Steuergrößen beschreiben. Ihre Dimension ist gleich der Anzahl der Steuergrößen.

Die oben hergeleiteten Gleichungen werden zu einem Modell zusammengefasst, mit dem die gesamte Dynamik des flexiblen Flugzeugs unter den in den vorhergehenden Abschnitten genannten Voraussetzungen beschrieben werden kann. Die Zustände zur Beschreibung der Bewegung des Starrkörpers werden im Vektor

$$
\underline{x}_1 = \begin{bmatrix} \Delta u & w & q & \theta & v & p & r & \phi & \psi \end{bmatrix}^T
\qquad (32)
$$

zusammengefasst, $\underline{\varepsilon}$ und $\underline{v}$ bezeichnen die eingeführten elastischen Moden, während die Steuergrößen im Vektor $\underline{c}$ enthalten sind. Wie bei der Einführung der aerodynamischen Kräfte wird auch hier vom symmetrischen horizontalen Geradeausflug ausgegangen. Sämtliche Störterme werden als hinreichend klein angenommen, so dass die lineare Näherung für die Aerodynamik gültig ist. Weiterhin wird $\underline{A}_{\dot x l}$ vernachlässigt. Unter diesen Voraussetzungen können die Bewegungsgleichungen in der folgenden Form geschrieben werden:

$$\begin{bmatrix} \underline{\dot{x}}_1 \\ \underline{\dot{\varepsilon}} \\ \underline{\dot{v}} \end{bmatrix} = \begin{bmatrix} \underline{A}_{11} & \underline{A}_{12} & \underline{A}_{13} \\ \underline{0} & \underline{0} & \underline{I}_k \\ \underline{A}_{31} & \underline{A}_{32} & \underline{A}_{33} \end{bmatrix} \begin{bmatrix} \underline{x}_1 \\ \underline{\varepsilon} \\ \underline{v} \end{bmatrix} + \begin{bmatrix} \underline{B}_1 \\ \underline{0} \\ \underline{B}_3 \end{bmatrix} \underline{c} + \begin{bmatrix} \underline{F} \\ \underline{0} \\ \underline{0} \end{bmatrix} \underline{g}(\underline{x}_1) \qquad (33)$$

$$\underline{b} = \begin{bmatrix} \underline{C}_1 & \underline{C}_2 & \underline{C}_3 \end{bmatrix} \begin{bmatrix} \underline{x}_1 \\ \underline{\varepsilon} \\ \underline{v} \end{bmatrix} + \underline{H}\,\underline{h}(\underline{x}_1) + \underline{D}\,\underline{c} \qquad (34)$$

Die in Gleichung (33) und (34) verwendeten Teilmatrizen werden mit den folgenden Abkürzungen:

$$\Delta = I_z I_x - I_{zx}^{\,2}$$

$$I_{qr1} = I_y I_z - I_z^{\,2} - I_{zx}^{\,2} \qquad I_{pq1} = I_{zx}\left(I_z + I_x - I_y\right)$$

$$I_{qr2} = I_{zx}\left(I_y - I_z - I_x\right) \qquad I_{pq2} = I_{zx}^{\,2} + I_x^{\,2} - I_x I_y \qquad (35)$$

$$m_{\dot{w}} = m - Z_{\dot{w}} \qquad\qquad m_{\dot{v}} = m - Y_{\dot{v}}$$

$$L_i' = I_z L_i + I_{zx} N_i \qquad\qquad N_i' = I_{zx} L_i + I_x N_i$$

zusammengestellt.

$$\underline{A}_{11} = \begin{bmatrix} \underline{A}_{long} & \underline{0} \\ \underline{0} & \underline{A}_{lat} \end{bmatrix} \qquad (36)$$

$$\underline{A}_{long} = \begin{bmatrix} \dfrac{X_u}{m} + \dfrac{Z_u X_{\dot{w}}}{m_{\dot{w}} m} & \dfrac{X_w}{m} + \dfrac{Z_w X_{\dot{w}}}{m_{\dot{w}} m} & \dfrac{X_q}{m} + \dfrac{X_{\dot{w}}(Z_q + m u_0)}{m_{\dot{w}} m} & 0 \\[2mm] \dfrac{Z_u}{m_{\dot{w}}} & \dfrac{Z_w}{m_{\dot{w}}} & \dfrac{Z_q + m u_0}{m_{\dot{w}}} & 0 \\[2mm] \dfrac{1}{I_y}\left(M_u + \dfrac{M_{\dot{w}} Z_u}{m_{\dot{w}}}\right) & \dfrac{1}{I_y}\left(M_w + \dfrac{M_{\dot{w}} Z_w}{m_{\dot{w}}}\right) & \dfrac{1}{I_y}\left(M_q + \dfrac{M_{\dot{w}}(Z_q + m u_0)}{m_{\dot{w}}}\right) & 0 \\[2mm] 0 & 0 & 0 & 0 \end{bmatrix} \qquad (37)$$

$$\underline{A}_{lat} = \begin{bmatrix} \dfrac{Y_v}{m_{\dot{v}}} & \dfrac{Y_p}{m_{\dot{v}}} & \dfrac{Y_r - m u_0}{m_{\dot{v}}} & 0 & 0 \\[2mm] \dfrac{L_v'}{\Delta} + Y_v \dfrac{L_{\dot{v}}'}{\Delta m_{\dot{v}}} & \dfrac{L_p'}{\Delta} + Y_p \dfrac{L_{\dot{v}}'}{\Delta m_{\dot{v}}} & \dfrac{L_r'}{\Delta} + \dfrac{L_{\dot{v}}'(Y_r - m u_0)}{\Delta m_{\dot{v}}} & 0 & 0 \\[2mm] \dfrac{N_v'}{\Delta} + Y_v \dfrac{N_{\dot{v}}'}{\Delta m_{\dot{v}}} & \dfrac{N_p'}{\Delta} + Y_p \dfrac{N_{\dot{v}}'}{\Delta m_{\dot{v}}} & \dfrac{N_r'}{\Delta} + \dfrac{N_{\dot{v}}'(Y_r - m u_0)}{\Delta m_{\dot{v}}} & 0 & 0 \\[2mm] 0 & 1 & 0 & 0 & 0 \\[2mm] 0 & 0 & 0 & 0 & 0 \end{bmatrix} \qquad (38)$$

$$\underline{A}_{12} = \left[\underline{A}_{12long} \quad \underline{A}_{12lat}\right]^{T} \tag{39}$$

wobei

$$\underline{A}_{12long} = \left[ \frac{\underline{X}_{\varepsilon}^{T}}{m} + \frac{\underline{Z}_{\varepsilon}\,X_{\dot{w}}}{m_{\dot{w}}\,m} \quad \frac{\underline{Z}_{\varepsilon}^{T}}{m_{\dot{w}}} \quad \frac{1}{I_{y}}\left(\underline{M}_{\varepsilon} + \frac{M_{\dot{w}}\underline{Z}_{\varepsilon}}{m_{\dot{w}}}\right)^{T} \quad \underline{0}^{T} \right] \tag{40}$$

$$\underline{A}_{12lat} = \left[ \frac{\underline{Y}_{\varepsilon}^{T}}{m_{\upsilon}} \quad \frac{1}{\Delta}\left(\underline{L}_{\varepsilon}^{'} + \underline{Y}_{\varepsilon}\frac{L_{\upsilon}^{'}}{\Delta m_{\upsilon}}\right)^{T} \quad \frac{1}{\Delta}\left(\underline{N}_{\varepsilon}^{'} + \underline{Y}_{\varepsilon}\frac{N_{\upsilon}^{'}}{\Delta m_{\upsilon}}\right)^{T} \quad \underline{0}^{T} \quad \underline{0}^{T} \right]$$

Die Matrizen $\underline{A}_{13}$ und $\underline{B}_{1}$ erhält man durch jeweiliges Ersetzen des Indizes ε in der Matrix $A_{12}$ durch ν bzw. *c*. Für die übrigen Matrizen gilt:

$$\underline{A}_{31} = \left(\underline{I}_{k} - \underline{I}^{-1}\underline{C}_{\nu}\right)^{-1}\underline{A}_{x_{1}},$$
$$\underline{A}_{32} = \left(\underline{I}_{k} - \underline{I}^{-1}\underline{C}_{\nu}\right)^{-1}\left(\underline{I}^{-1}\underline{A}_{\varepsilon} - \underline{\omega}\,\underline{\omega}^{T}\right),$$
$$\underline{A}_{33} = \left(\underline{I}_{k} - \underline{I}^{-1}\underline{C}_{\nu}\right)^{-1}\left(\underline{I}^{-1}\underline{B}_{\upsilon} - 2\underline{d}\,\underline{\omega}^{T}\right),$$
$$\underline{B}_{3} = \left(\underline{I}_{k} - \underline{I}^{-1}\underline{C}_{\nu}\right)^{-1}\underline{A}_{c}, \tag{41}$$

$$\underline{F} = \begin{bmatrix} -g & \dfrac{g\,X_{\dot{w}}}{m_{\dot{w}}} & 0 & 0 & 0 & 0 & 1 & \dfrac{X_{\dot{w}}}{m_{\dot{w}}} & 0 & 0 & 0 & 0 & 0 \\[2mm] 0 & \dfrac{m\,g}{m_{\dot{w}}} & 0 & 0 & 0 & 0 & 0 & \dfrac{m}{m_{\dot{w}}} & 0 & 0 & 0 & 0 & 0 \\[2mm] 0 & \dfrac{M_{\dot{w}}\,m\,g}{I_{y}\,m_{\dot{w}}} & 0 & 0 & 0 & 0 & 0 & \dfrac{M_{\dot{w}}\,m}{I_{y}\,m_{\dot{w}}} & 0 & 0 & 0 & \dfrac{I_{z}-I_{x}}{I_{y}} & \dfrac{I_{zx}}{I_{y}} \\[2mm] 0 & 0 & 1 & 0 & 0 & 0 & 0 & 0 & 0 & 0 & 0 & 0 & 0 \\[2mm] 0 & 0 & 0 & \dfrac{m\,g}{m_{\upsilon}} & 0 & 0 & 0 & 0 & \dfrac{m}{m_{\upsilon}} & 0 & 0 & 0 & 0 \\[2mm] 0 & 0 & 0 & \dfrac{m\,g\,L_{\upsilon}^{'}}{\Delta m_{\upsilon}} & 0 & 0 & 0 & 0 & \dfrac{m\,L_{\upsilon}^{'}}{\Delta m_{\upsilon}} & \dfrac{I_{qr1}}{\Delta} & \dfrac{I_{pq1}}{\Delta} & 0 & 0 \\[2mm] 0 & 0 & 0 & \dfrac{m\,g\,N_{\upsilon}^{'}}{\Delta m_{\upsilon}} & 0 & 0 & 0 & 0 & \dfrac{m\,N_{\upsilon}^{'}}{\Delta m_{\upsilon}} & \dfrac{I_{qr2}}{\Delta} & \dfrac{I_{pq2}}{\Delta} & 0 & 0 \\[2mm] 0 & 0 & 0 & 0 & 1 & 0 & 0 & 0 & 0 & 0 & 0 & 0 & 0 \\[2mm] 0 & 0 & 0 & 0 & 0 & 1 & 0 & 0 & 0 & 0 & 0 & 0 & 0 \end{bmatrix}$$

(42)

$$\underline{g}(\underline{x}_1) = \begin{bmatrix} \sin\theta \\ \cos\theta\,\cos\phi - 1 \\ q\,\cos\phi - r\,\sin\phi \\ \cos\theta\,\sin\phi \\ (q\,\sin\phi + r\,\cos\phi)\,\tan\theta \\ \dfrac{1}{\cos\theta}(q\,\sin\phi + r\,\cos\phi) \\ -qw + rv \\ -pv + q\,\Delta u \\ -r\,\Delta u + p\,w \\ qr \\ pq \\ rp \\ r^2 - p^2 \end{bmatrix} \tag{43}$$

$$\underline{C}_1 = \begin{bmatrix} \underline{C}_{1long} & \underline{C}_{1lat} \end{bmatrix}, \tag{44}$$

$$\underline{C}_{1long} = \begin{bmatrix} \dfrac{X_u}{m} + \dfrac{X_{\dot{w}}Z_u}{m\,m_{\dot{w}}} + \underline{K}_x\left(\underline{I}_k - \underline{I}^{-1}\underline{C}_v\right)^{-1}\underline{a}_u \\[2mm] \dfrac{Z_u}{m_{\dot{w}}} - \dfrac{x_p}{I_y}\left(M_u + \dfrac{M_{\dot{w}}Z_u}{m_{\dot{w}}}\right) + \underline{K}_z\left(\underline{I}_k - \underline{I}^{-1}\underline{C}_v\right)^{-1}\underline{a}_u \\[2mm] \underline{K}_y\left(\underline{I}_k^{-1} - \underline{I}\,\underline{C}_v\right)^{-1}\underline{a}_u \end{bmatrix}$$

$$\begin{bmatrix} \dfrac{X_w}{m} + \dfrac{X_{\dot{w}}Z_w}{m\,m_{\dot{w}}} + \underline{K}_x\left(\underline{I}_k - \underline{I}^{-1}\underline{C}_v\right)^{-1}\underline{a}_w \\[2mm] \dfrac{Z_w}{m_{\dot{w}}} - \dfrac{x_p}{I_y}\left(M_w + \dfrac{M_{\dot{w}}Z_w}{m_{\dot{w}}}\right) + \underline{K}_z\left(\underline{I}_k - \underline{I}^{-1}\underline{C}_v\right)^{-1}\underline{a}_w \\[2mm] \underline{K}_y\left(\underline{I}_k^{-1} - \underline{I}\,\underline{C}_v\right)^{-1}\underline{a}_w \end{bmatrix}$$

$$\begin{bmatrix} \dfrac{X_q}{m} + \dfrac{X_{\dot{w}}(Z_q + mu_0)}{m\,m_{\dot{w}}} + \underline{K}_x\left(\underline{I}_k - \underline{I}^{-1}\underline{C}_v\right)^{-1}\underline{a}_q & 0 \\[2mm] \dfrac{Z_q + mu_0}{m_{\dot{w}}} - \dfrac{x_p}{I_y}\left(M_q + \dfrac{M_{\dot{w}}(Z_q + mu_0)}{m_{\dot{w}}}\right) + \underline{K}_z\left(\underline{I}_k - \underline{I}^{-1}\underline{C}_v\right)^{-1}\underline{a}_q & 0 \\[2mm] \underline{K}_y\left(\underline{I}_k^{-1} - \underline{I}\,\underline{C}_v\right)^{-1}\underline{a}_q & 0 \end{bmatrix}, \tag{45}$$

$$\underline{C}_{1lat} = \begin{bmatrix} \underline{K}_x \left( \underline{I}_k^{-1} - \underline{IC}_v \right)^{-1} \underline{a}_v \\ \underline{K}_z \left( \underline{I}_k^{-1} - \underline{IC}_v \right)^{-1} \underline{a}_v \\ \dfrac{Y_v}{m_v} + \dfrac{x_p}{\Delta} \left( N_v^{'} + \dfrac{N_v^{'} Y_v}{m_v} \right) + \underline{K}_y \left( \underline{I}_k - \underline{I}^{-1} \underline{C}_v \right)^{-1} \underline{a}_v \end{bmatrix}$$

$$\underline{K}_x \left( \underline{I}_k^{-1} - \underline{IC}_v \right)^{-1} \underline{a}_p$$
$$\underline{K}_z \left( \underline{I}_k^{-1} - \underline{IC}_v \right)^{-1} \underline{a}_p$$
$$\dfrac{Y_p}{m_v} + \dfrac{x_p}{\Delta} \left( N_p^{'} + \dfrac{N_v^{'} Y_p}{m_v} \right) + \underline{K}_y \left( \underline{I}_k - \underline{I}^{-1} \underline{C}_v \right)^{-1} \underline{a}_p$$

$$\begin{matrix} \underline{K}_x \left( \underline{I}_k^{-1} - \underline{IC}_v \right)^{-1} \underline{a}_r & 0\ 0 \\ \underline{K}_z \left( \underline{I}_k^{-1} - \underline{IC}_v \right)^{-1} \underline{a}_r & 0\ 0 \\ \dfrac{Y_r - mu_0}{m_v} + \dfrac{x_p}{\Delta} \left( N_r^{'} + \dfrac{N_v^{'}(Y_r - mu_0)}{m_v} \right) + \underline{K}_y \left( \underline{I}_k - \underline{I}^{-1} \underline{C}_v \right)^{-1} \underline{a}_r & 0\ 0 \end{matrix}, \qquad (46)$$

$$\underline{C}_2 = \begin{bmatrix} \dfrac{X_\varepsilon}{m} + \dfrac{X_{\dot{w}} Z_\varepsilon}{m\,m_{\dot{w}}} + \underline{K}_x \left( \underline{I}_k - \underline{I}^{-1} \underline{C}_v \right)^{-1} \left( \underline{I}^{-1} \underline{A}_\varepsilon - \underline{\omega}\underline{\omega}^T \right) \\ \dfrac{Z_\varepsilon}{m_{\dot{w}}} - \dfrac{x_p}{I_y} \left( \underline{M}_\varepsilon + \dfrac{M_{\dot{w}} Z_\varepsilon}{m_{\dot{w}}} \right) + \underline{K}_z \left( \underline{I}_k - \underline{I}^{-1} \underline{C}_v \right)^{-1} \left( \underline{I}^{-1} \underline{A}_\varepsilon - \underline{\omega}\underline{\omega}^T \right) \\ \dfrac{Y_\varepsilon}{m_v} + \dfrac{x_p}{\Delta} \left( \underline{N}_\varepsilon^{'} + \dfrac{N_v^{'} Y_\varepsilon}{m_v} \right) + \underline{K}_y \left( \underline{I}_k - \underline{I}^{-1} \underline{C}_v \right)^{-1} \left( \underline{I}^{-1} \underline{A}_\varepsilon - \underline{\omega}\underline{\omega}^T \right) \end{bmatrix}, \qquad (47)$$

Die Matrizen $\underline{C}_3$ und $\underline{D}$ erhält man durch Ersetzen des Indizes $\varepsilon$ durch jeweils $v$ bzw. $c$. $\underline{H}$ und $\underline{h}(\underline{x}_1)$ lauten:

$$\underline{H} = \begin{bmatrix} \dfrac{X_{\dot{w}}\,g}{m_{\dot{w}}} & 0 & 0 & 1 & -\dfrac{X_{\dot{w}}}{m_{\dot{w}}} \\ \dfrac{m\,g}{m_{\dot{w}}} \left( 1 - \dfrac{x_p M_{\dot{w}}}{I_y} \right) & -g & 0 & 0 & \dfrac{m}{m_{\dot{w}}} \left( 1 - \dfrac{x_p M_{\dot{w}}}{I_y} \right) \\ 0 & 0 & \left( \dfrac{Y_v\,g}{m_v} + \dfrac{x_p N_v^{'} m\,g}{\Delta m_v} \right) & 0 & 0 \end{bmatrix}$$

$$(48)$$

$$\begin{bmatrix} 0 & 0 & 0 & 0 & -x_p & -x_p \\ 0 & 0 & 0 & -\dfrac{x_p}{I_y}(I_z - I_x) & -\dfrac{x_p I_{zx}}{I_y} & \dfrac{x_p I_{zx}}{I_y} \\ \dfrac{m}{m_{\dot{\upsilon}}}\left(1 + \dfrac{x_p N_{\dot{\upsilon}}'}{\Delta}\right) & \dfrac{x_p I_{qr2}}{\Delta} & \dfrac{x_p I_{pq2}}{\Delta} & 0 & 0 & 0 \end{bmatrix},$$

$$\underline{h}(\underline{x}_1) = \begin{bmatrix} \cos\theta \ \cos\phi - 1 \\ \cos\theta \ \cos\phi \\ \cos\theta \ \sin\phi \\ -qw + r\upsilon \\ -p\upsilon + q\Delta u \\ -r\Delta u + pw \\ qr \\ pq \\ rp \\ r^2 \\ p^2 \end{bmatrix} \qquad (49)$$

Das in Gleichung (33) beschriebene nichtlineare Simulationsmodell enthält eine Wirksamkeitsmatrix $\underline{F}$, welche die nichtlinearen Eigenschaften von Systemgrößen berücksichtigt. Die Wirksamkeitsmatrix $\underline{F}$ ist in Gleichung (42) angegeben.

Erweitert man nun das Modell um aerodynamische, strukturdynamische und aeroelastische Nichtlinearitäten ergeben sich a.) zusätzliche Einträge im *Nichtlinearitätenvektor* $g$ $(\underline{x}_1)$, z. B. $g_{14}(w)=w^2 + 3w^4$, $g_{15}(v)=v^2$, $g_{16}(v_1) = v_1^2$, $g_{17}(v_2)=sgn(v_2)$, dabei ist sgn die sogenannte Signumfunktion der Mathematik und b.) zusätzliche Spalten in der Matrix $\begin{bmatrix} \underline{F} \\ \underline{0} \\ \underline{0} \end{bmatrix}$ aus Gleichung (33) :

$$
\underline{F} \quad \begin{bmatrix} X_{NL,w} & 0 \\ Z_{NL,w} & 0 \\ 0 & 0 \\ 0 & 0 \\ 0 & Y_{NL,v} \\ 0 & 0 \\ 0 & 0 \\ 0 & 0 \\ 0 & 0 \end{bmatrix} \quad \underline{0}
$$

$$
\begin{matrix} \underline{0} & \underline{0} & \underline{0} \end{matrix}
$$

$$
\underline{0} \qquad \underline{0} \qquad \begin{bmatrix} 0 & 0 \\ 0 & 0 \\ D_{NL,1} & 0 \\ 0 & 0 \\ 0 & D_{NL,2} \\ 0 & 0 \\ 0 & 0 \\ 0 & 0 \\ 0 & 0 \end{bmatrix}
$$

(50)

Die Größen $X_{NL,w}$, $Z_{NL,w}$, $Y_{NL,v}$, $D_{NL,1}$ und $D_{NL,2}$ beschreiben die Einflussstärke der Nichtlinearität.

Das in Gleichung (33) dargestellte nichtlineare Simulationsmodell lässt sich physikalisch anschaulicher (in Verallgemeinerung der Newtonschen und Eulerschen Bewegungsgleichung) auch wie folgt beschreiben:

$$
M\,\ddot{x} + D\,\dot{x} + K\,x + Fg\,(x,\dot{x},p,t) = p + R
$$

$$
wobei : x = \begin{bmatrix} x\_Flugmechanik, x\_System, x\_Aeroelastik \end{bmatrix},
$$

$$
p = \begin{bmatrix} p\_Böe, p\_Pilot, p\_Triebwerk, p\_Fehlerfall \end{bmatrix},
$$

$$
Fg\,(x,\dot{x},p,t) \; alle\; Nichtlinearitäten\; aus\; Flugmechanik,
$$

$$
Aerodynamik, Systemen, Triebwerk, enthält
$$

$$
R = Rauschen
$$

und wobei:

$M$: Erweiterte Massenmatrix

$D$: Erweiterte Dämpfungsmatrix

$K$: Erweiterte Steifigkeitsmatrix                    (51)

Da die Transformation von Gleichung (33) in die Form von Gleichung (50) zu modifizierten Vektoren $x$ und $g$ $(x, \dot{x}, p, t)$ und einer modifizierten Matrix $F$ führt, sind diese neuen Vektoren und Matrizen nicht unterstrichen.

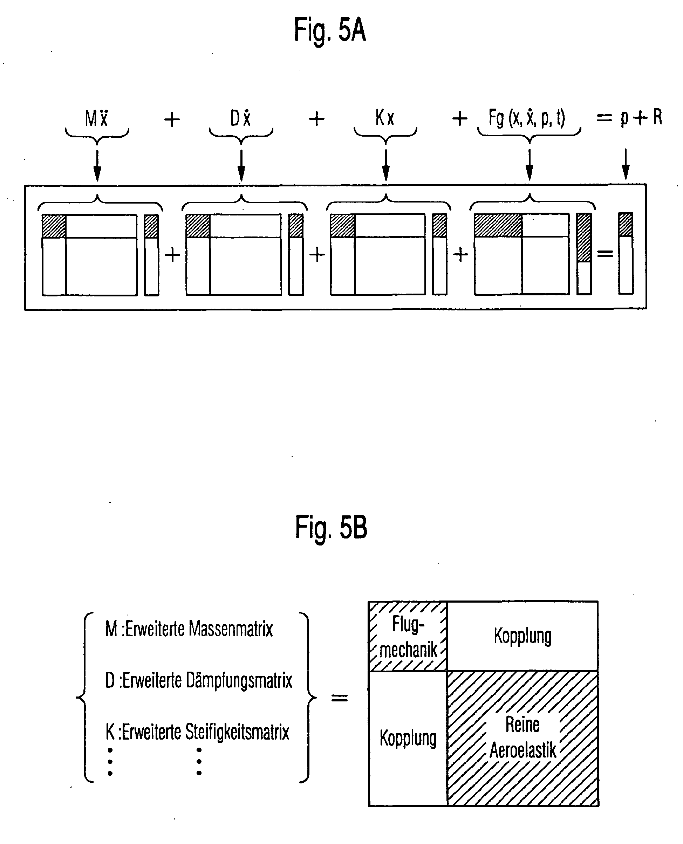

Das Gleichungssystem ist anschaulich in dem Diagramm der Figur 5A dargestellt. Das in Figur 5A dargestellte Gleichungssystem umfasst ein dynamisches Simulationsmodell bestehend aus linearen Differentialgleichungen, das um eine Wirksamkeitsmatrix F erweitert ist, die mit einem Nicht-*Linearitätsvektor g (x, $\dot{x}$, p, t)* multipliziert wird.

Auf der rechten Seite des Gleichungssystems befindet sich ein Hyper-Eingangsvektor *p* des Luftfahrzeugs mit mehreren Subvektoren. Zusätzlich ist ein Rauschvektor *R* eingeführt worden, der sämtliche Modellunsicherheiten beschreibt. Der Vektor *x* bildet einen Hyper-Bewegungsgrößenvektor des Luftfahrzeugs. Wie man in Figur 5A erkennen kann, wird die zweite zeitliche Ableitung $\ddot{x}$ des Hyper-Bewegungsvektor *x* mit einer erweiterten Massenmatrix *M* multipliziert und mit dem Produkt aus der ersten zeitlichen Ableitung $\dot{x}$ des Hyper-Bewegungsvektors x und einer erweiterten Dämpfungsmatrix *D* sowie dem Produkt aus einer Steifigkeitsmatrix *K* und dem Hyper-Bewegungsvektor *x* sowie mit dem Produkt aus der Wirksamkeitsmatrix *F* mit dem Nichtlinearitätsvektor *g(x, $\dot{x}$, p, t)* addiert, wobei diese Summe den Hyper-Eingangsvektor *p* des Luftfahrzeugs plus Rauschen *R* ergibt.

Mit dieser Darstellung gemäß Figur 5A lassen sich weitere nicht-lineare Erweiterungen anschaulich darstellen. Zusätzliche Nicht-Linearitäten in der Triebwerksdynamik, im Systemverhalten oder bei Fehlerfällen erweitern den Nicht-Linearitätsvektor *g(x, $\dot{x}$, p, t)* und die Wirksamkeitsmatrix *F* um zusätzliche Einträge.

Bei der Massenmatrix *M*, der Dämpfungsmatrix *D* und der Steifigkeitsmatrix *K* handelt es sich um erweiterte Matrizen, welche neben den Struktureigenschaften die Aerodynamik und Systemdynamik des Luftfahrzeugs berücksichtigen. Es gilt:

$$K = K_{Struktur} + K_{Aerodynamik} + K_{System},$$
$$D = D_{Struktur} + D_{Aerodynamik} + D_{System},$$
$$M = M_{Struktur} + M_{Aerodynamik} + M_{System}.$$

Die Elemente der Struktur- und Systemmatrizen können mittels physikalisch-mathematischer Modelle und Methoden kombiniert mit einfachen Boden- und Laborversuche gut ermittelt werden. Dies gilt nicht für die Aerodynamikmatrizen. Die Aerodynamik beschreibt allgemein das Verhalten von Körpern in kompressiblen Fluiden, insbesondere Luft. Die Aerodynamik beschreibt insbesondere Kräfte, die bei einem Flug eines Luftfahrzeugs auftreten. Abgesehen von Windkanalversuchen, die eine beschränkte Gültigkeit und Übertragbarkeit haben, insbesondere bei instationärer Aerodynamik von elastischen Strukturen, sind also keine Boden- und Laborversuche möglich. Im Gegensatz zu den Struktur - und Systemeigenschaften besteht also erst durch den Flugversuch die Möglichkeit die Aerodynamik genau zu ermitteln. Multipliziert man die Matrix $K_{Aerodynamik}$ mit *x*, $D_{Aerodynamik}$ mit $\dot{x}$ und $M_{Aerodynamik}$ mit $\ddot{x}$ ergeben sich die zu *x*,$\dot{x}$ und $\ddot{x}$ gehörigen generalisierten oder verallgemeinerten aerodynamischen Verteilungen. Durch Multiplikation mit den Modenformfunktionen $f_{i,n}$, $g_{i,n}$ sowie $h_{i,n}$ und Aufsummation können somit an jedem Ort *i* die aerodynamischen Kräfte berechnet werden. Führt man die Multiplikation für alle Orte *i* aus, die zu einem Flugzeugteilbereich oder einer -komponente gehören, so erhält man die aerodynamischen Verteilungen für den ausgewählten Flugzeugteilbereich oder die ausgewählte Flugzeugkomponente.

Figur 5B verdeutlicht die Struktur einer erweiterten Matrix. Die Kopplung beschreibt dabei die Einflussstärke einer Kenngröße auf das Luftfahrzeug. Die Massenmatrix *M*, die Dämpfungsmatrix *D* und die Steifigkeitsmatrix *K* beschreiben lineare Einflüsse, während die Wirksamkeitsmatrix *F* nicht-lineare Eigenschaften von Systemgrößen angibt. Diese Kenngrößen sind flugmechanische Kenngrößen, Kenngrößen der Bordsysteme und Kenngrößen der Aeroelastik. Die Aeroelastik beschreibt Verformungen oder Schwingungen an dem Luftfahrzeug bzw. Flugzeug, die durch eine elastische Verformung der Struktur des Luftfahrzeugs, insbesondere am Leit- oder Tragwerk in Verbindung mit einer Luftströmung auftreten. Die Aeroelastik beschreibt die gegenseitige Wechselwirkung des elastischen Flugkörpers und der aerodynamischen Kräfte. Die Kopplungsmatrizen verdeutlichen also, dass die verteilte bzw. lokale Strukturbewegung des Flugzeugs und die Gesamtbewegung des Flugzeugs in gegenseitiger Wechselwirkung stehen. Z.B. beeinflusst eine Gesamtbewegung des Flugzeugs über die aerodynamischen Verteilungen im linken unteren Kopplungsblock in den Matrizen *M, D und K* die Dynamik der Normalmoden, damit die verteilte und lokale Bewegung des Flugzeugs und damit die lokalen Beschleunigungen und die hiermit verbundenen Lasten. Über den rechten oberen Kopplungsblock wirkt die Dynamik der Normalmoden, damit die verteilte und lokale Bewegung des Flugzeug auf die Gesamtbewegung und somit z.B. auf die Beschleunigung des Gesamtflugzeugs. Hierdurch wird bereits die integriert Vorgehensweise bei der Bestimmung von lokalen Beschleunigungen, den hiermit verbundenen dynamischen Lasten und aerodynamischen Daten deutlich.

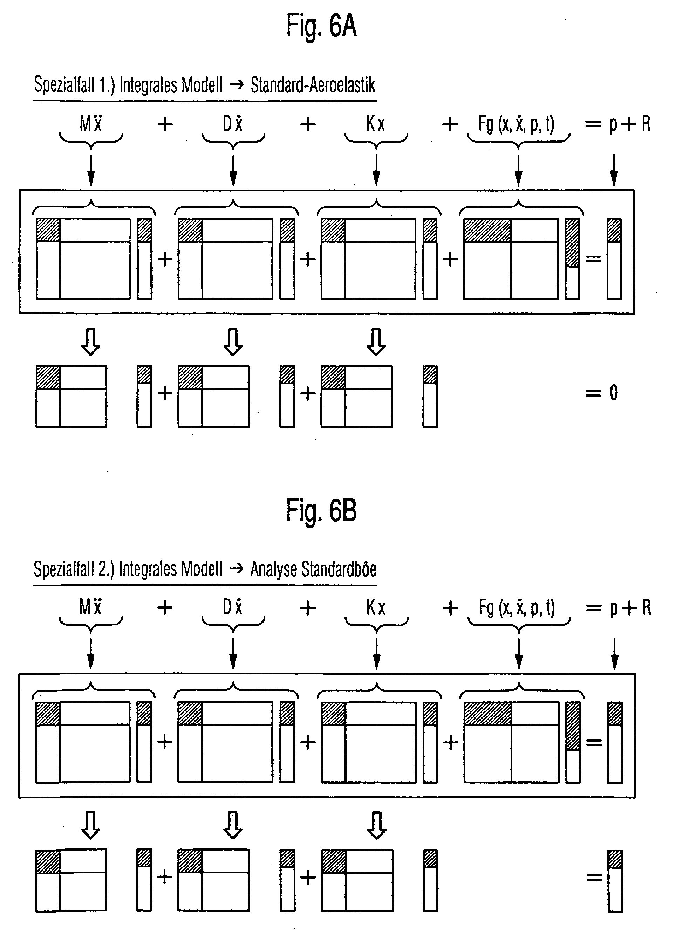

Die Figuren 6A-6D zeigen Sonderfälle des allgemeinen in Figur 5A dargestellten nicht-linearen Simulationsmodells, wie es bei dem erfindungsgemäßen Verfahren eingesetzt wird.

Bei dem in Figur 6A dargestellten Sonderfall ist die nicht-lineare Wirksamkeitsmatrix *F* sowie der Linearitätsvektor *g* sowie der Eingangsgrößenvektor *p* Null. Man gelangt auf diese Weise zu dem Sonderfall eines rein linearen Gleichungssystems von Differenzialgleichungen.

Figur 6B beschreibt den Sonderfall, bei dem die nicht-lineare Wirksamkeitsmatrix *F* sowie der Nicht-Linearitätsvektor *g* Null sind während der Eingangsgrößenvektor *p* beispielsweise zur Darstellung einer Windböe, nicht Null ist. Das in Figur 6B dargestellte Simulationsmodell eignet sich somit beispielsweise zur Analyse von Standardwindböen, die auf das Luftfahrzeug wirken.

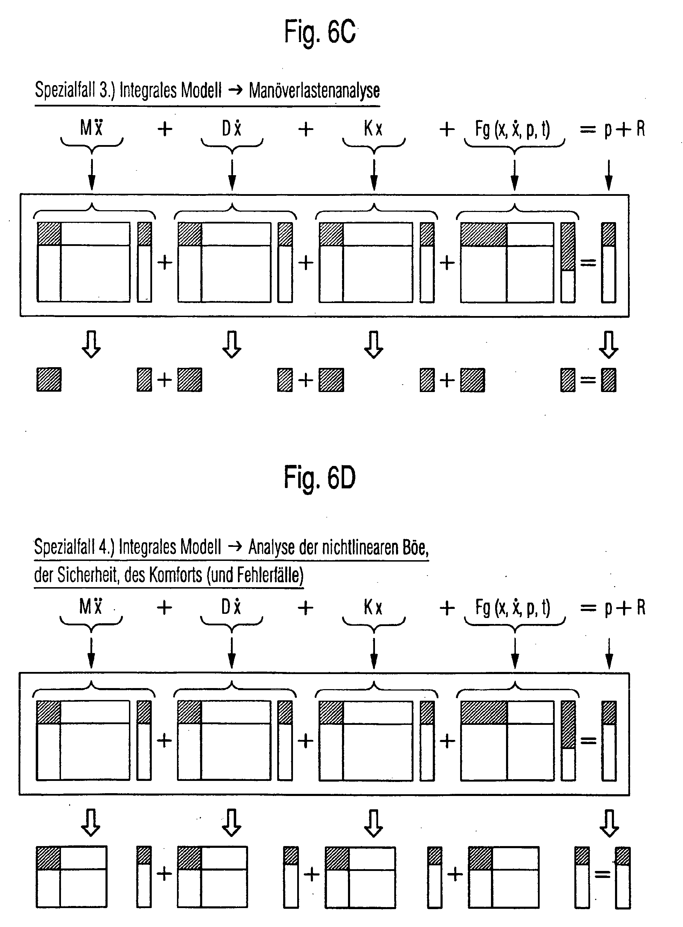

Bei dem in Figur 6C dargestellten Sonderfall werden nur flugmechanische Größen betrachtet, so dass das in Figur 6C dargestellte Simulationsmodell sich zur Analyse von Manöverlasten eignet, wobei das Flugzeug als Ganzes manövriert wird.

Bei dem in Figur 6D dargestellten Fall handelt es sich um das integrale Simulationsmodell, welches sich auch zur Analyse von nicht-linearen Windböen, der Sicherheit und des Passagierkomforts selbst bei extremen Flugmanövern und bei Lasten im Fehlerfall eignet. Das im Zusammenhang mit Figuren 5A, 5B sowie 6A-6D vorgestellte nicht-lineare Simulationsmodell wird bei dem erfindungsgemäßen System und Verfahren 1 zur Bestimmung von aerodynamischen Daten und dynamischen Lastverteilungen bei einem Luftfahrzeug eingesetzt.

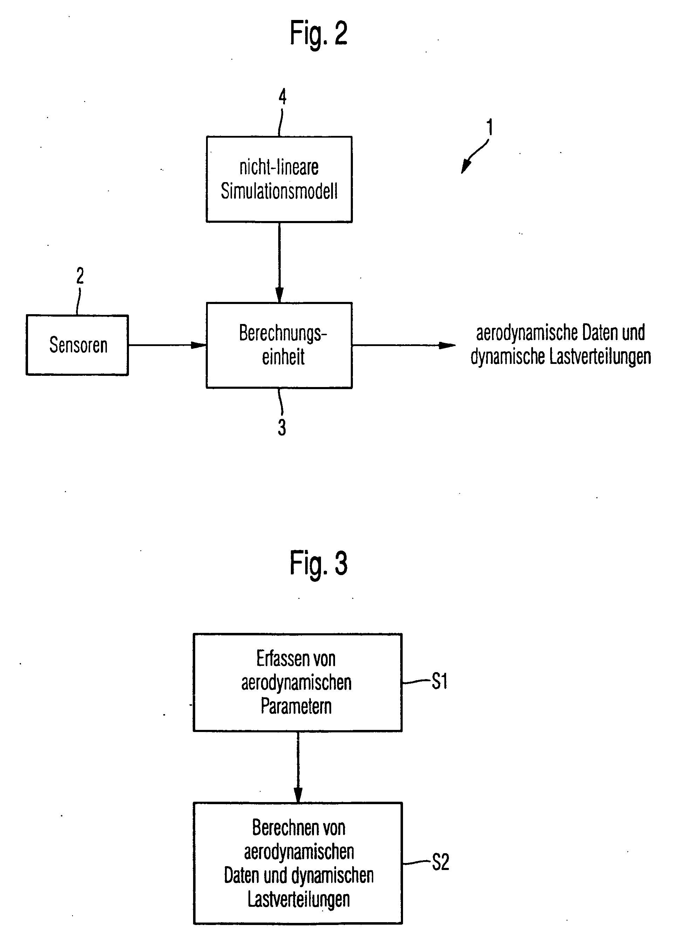

Figur 2 zeigt ein Blockschaltbild einer möglichen Ausführungsform des erfindungsgemäßen Systems 1 zur integrierten Bestimmung von aerodynamischen Daten und dynamischen Lastverteilungen bei einem Luftfahrzeug.

Das System 1 weist eine Vielzahl von Sensoren 2 auf, die aerodynamische Parameter des Luftfahrzeugs direkt oder indirekt erfassen. Das System 1 zur integrierten Bestimmung von aerodynamischen und dynamischen Lastverteilungen weist mindestens einen Sensor 2 auf. Diese Sensoren 2 umfassen Sensoren unterschiedlicher Art, insbesondere Kraftsensoren, Drucksensoren, Beschleunigungssensoren aber auch beispielsweise Deformationssensoren oder Dehnungsmessstreifen. Die Sensoren erfassen Kräfte und Momente, die auf Bauelemente bzw. Bauteile eines Luftfahrzeugs während des Fluges wirken. Darüber hinaus erfassen die Sensoren 2 auch Deformationen und Verformungen von Bauelementen bzw. Bauteilen während des Fluges. Bei den Bauteilen des Luftfahrzeugs kann es sich um beliebige Bauelemente des Flugzeugrumpfes oder der Steuerflächen handeln sowie um Tragflächen bzw. Flugklappen. Bei den Bauteilen kann es sich auch um Bauteile handeln, die nur in bestimmten Flugphasen des Flugzeugs der Luftströmung ausgesetzt sind, beispielsweise Bauteile des beim Starten und Landen ausgefahrenen Fahrwerkes. Die Sensoren 2 erfassen direkt oder indirekt aerodynamische Parameter bzw. Kenngrößen des Luftfahrzeugs. Die verschiedenen aerodynamischen Parameter bilden einen Parametervektor, welcher unterschiedliche Parameter für unterschiedliche Bauteile des Flugzeugs bzw. Luftfahrzeugs umfasst. Der Parametervektor umfasst beispielsweise an verschiedenen Bauteilen des Flugzeugs angebrachte Sensoren, welche die auf das jeweilige Bauteil des Luftfahrzeugs wirkende Kräfte oder Momente erfassen.

Sensoren 2 können einen aerodynamischen Parameter des Luftfahrzeugs entweder direkt oder indirekt erfassen. Bei der indirekten Erfassung wird ein aerodynamischer Parameter mittels eines Gleichungssystems aus sensorisch erfassten Messgrößen berechnet. Die Sensoren 2 sind an eine Berechnungseinheit 3 angeschlossen. Bei der Berechnungseinheit 3 handelt es sich beispielsweise um einen oder mehrere Mikroprozessoren eines Computers.

Die Berechnungseinheit 3 befindet sich bei einer möglichen Ausführungsform innerhalb des zu untersuchenden Luftfahrzeugs. Bei einer alternativen Ausführungsform werden die von den Sensoren 2 erfassten aerodynamischen Parameter bzw. Messgrößen über eine Funkschnittstelle von dem Luftfahrzeug zu einer Bodenstation übertragen, in der sich die Berechnungseinheit 3 befindet.

Die Berechnungseinheit 3 hat Zugriff auf ein in einem Speicher 4 abgelegtes nicht-lineares Simulationsmodell. Als nicht-lineares Simulationsmodell wird vorzugsweise das in Figur 5A dargestellte Simulationsmodell eingesetzt. Die Berechnungseinheit 3 berechnet auf Basis des nicht-linearen Simulationsmodells des jeweiligen Luftfahrzeugs die aerodynamischen Daten und die dynamischen Lastverteilungen des Luftfahrzeugs in Abhängigkeit von den durch die Sensoren 2 erfassten aerodynamischen Parametern des Luftfahrzeugs.

Bei einer möglichen Ausführungsform berechnet die Berechnungseinheit 3 zudem Kenngrößen des Passagierkomforts, der Kabinensicherheit sowie Bewegungsgrößen der Aeroelastik und der Flugmechanik auf Basis des in dem Speicher 4 gespeicherten nicht-linearen Simulationsmodells und in Abhängigkeit von den erfassten aerodynamischen Parametern.

Bei einer möglichen Ausführungsform erfolgt die Berechnung der aerodynamischen Daten und der dynamischen Lastverteilungen sowie der Kenngrößen des Passagierkomforts, der Kabinensicherheit und der Bewegungsgrößen der Aeroelastik und der Flugmechanik durch die Berechnungseinheit 3 in Echtzeit.

Bei einer möglichen Ausführungsform werden die gewonnenen Daten zur Designoptimierung des jeweiligen Luftfahrzeugs eingesetzt. Dabei werden Ermüdungslasten für Bauteile des Luftfahrzeugs reduziert und vibrationskritische Zustände vermieden. Das Luftfahrzeug kann dahingehend optimiert werden, dass Beschleunigungskräfte, die auf Passagiere und Crewmitglieder wirken, minimiert werden, so dass die Sicherheit für die Crew und die Passagiere erhöht und auch der Flugkomfort gesteigert wird. Bei einer möglichen Ausführungsform wird das erfindungsgemäße System, wie es in Figur 2 dargestellt ist, in einem Flugsimulator verwendet, um ein gezieltes Pilotentraining zu ermöglichen. Die Piloten werden dabei derart trainiert, dass die auf die Passagiere wirkenden Beschleunigungskräfte zur Erhöhung des Flugkomforts in verschiedenen Flugsituationen so gering wie möglich gehalten werden.

Figur 3 zeigt ein einfaches Ablaufdiagramm einer möglichen Ausführungsform des erfindungsgemäßen Verfahrens zur Bestimmung von aerodynamischen Daten und dynamischen Lastverteilungen bei einem Luftfahrzeug während des Fluges.

In einem ersten Schritt S1 werden sensorisch aerodynamische Parameter des Luftfahrzeugs erfasst. Die Erfassung kann dabei direkt oder indirekt erfolgen.

In einem weiteren Schritt S2 werden anschließend die aerodynamischen Daten und dynamischen Lastverteilungen des Luftfahrzeugs auf Basis des vorgesehenen nicht-linearen Simulationsmodells des Luftfahrzeugs und in Abhängigkeit von den im Schritt S1 sensorisch erfassten aerodynamischen Parametern des Luftfahrzeugs berechnet.

Bei einer möglichen Ausführungsform wird das Verfahren, wie es in Figur 3 dargestellt ist, mittels eines Computerprogramms ausgeführt, welches auf einer Berechnungseinheit 3, insbesondere einem Mikroprozessor, abläuft. Diese Berechnungseinheit 3 kann sich innerhalb des Luftfahrzeugs oder in einer Bodenstation befinden. Bei einer möglichen Ausführungsform wird dieses Computerprogramm von einem Datenträger durch die Berechnungseinheit 3 geladen.

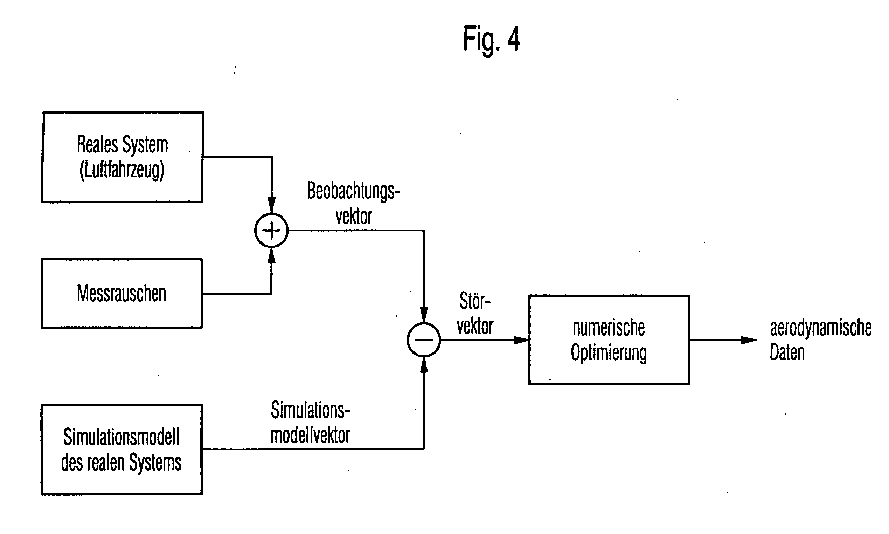

Figur 4 zeigt ein Diagramm zur Verdeutlichung einer möglichen Ausführungsform des erfindungsgemäßen Verfahrens. Die Sensoren 2 des erfindungsgemäßen Systems 1 liefern einen Beobachtungsvektor der sensorisch erfassten aerodynamischen Parameter für ein reales System bzw. das Luftfahrzeug, wobei ein Messrauschen einfließt.

Das Simulationsmodell des Luftfahrzeugs, das in dem Speicher 4 abgelegt ist, liefert einen Simulationsmodellvektor der aerodynamischen Parameter.

Die Berechnungseinheit 3 bzw. eine darin enthaltene Subtrahiereinheit berechnet einen Störvektor für die aerodynamischen Parameter, der einen Differenzvektor zwischen dem Beobachtungsvektor der sensorisch erfassten aerodynamischen Parameter und dem Simulationsmodellvektor der aerodynamischen Parameter ist.

Anschließend minimiert die Berechnungseinheit 3 bzw. eine darin enthaltene Einheit zur numerischen Optimierung den berechneten Störvektor für die aerodynamischen Parameter mittels eines numerischen Optimierungsverfahrens. Bei einer möglichen Ausführungsform wird als numerisches Optimierungsverfahren ein Maximum-Likelihood-Verfahren eingesetzt.

Bei einer weiteren möglichen Ausführungsform des erfindungsgemäßen Systems wird das gespeicherte nicht-lineare Simulationsmodell in Abhängigkeit des berechneten Differenzvektor bzw. Störvektor für die aerodynamischen Parameter automatisch adaptiert.

Ausgehend von dem in Figur 5A dargestellten nichtlinearen Simulationsmodell können mit Hilfe diskretisierter algebraischer Gleichungen zu jedem gewünschten Zeitpunkt die Lasten, komfort- und sicherheitsrelevanten Kenngrößen bzw. Parameter durch das erfindungsgemäße System 1 direkt berechnet werden.

Das Gleichungssystem kann wie folgt nach der zweiten Ableitung $\ddot{x}$ des Zustandsvektors aufgelöst werden:

$$\ddot{x} = -M^{-1}(D\,\dot{x} + K\,x - p + Fg(x,\dot{x},p,t) - R) \qquad (52)$$

Wählt man aus diesem Vektor $\ddot{x}$ die Modenbeschleunigungen $\ddot{\varepsilon}_n$ aus, so kann man mit Hilfe von Gleichung (22) die Beschleunigungen an beliebigen Punkten des Flugzeugs bzw. Luftfahrzeuges, die allein auf elastischen Verformungen beruhen, und somit die elastische Beschleunigungsverteilung über das gesamte Flugzeug, insbesondere also für jede Position der Kabine, berechnen. Sie bilden zusammen mit dem spezifischen Lastfaktor (siehe auch Gleichung (21) und die zugehörige Erläuterung) ein direktes Maß für Passagierkomfort und -sicherheit.

Unter Einführung eines Zustandsvektors als Hyper-Vektor

$$\underline{x} = \begin{bmatrix} \dot{x} \\ x \end{bmatrix}$$

ergibt sich für die erste Ableitung dieses Hyper-Vektors

$$\dot{\underline{x}} = \begin{bmatrix} \ddot{x} \\ \dot{x} \end{bmatrix}.$$

Damit lässt sich das nicht-lineare Simulationsmodell wie folgt darstellen:

$$\dot{\underline{x}} = \begin{bmatrix} -M^{-1} D & -M^{-1} K \\ 1 & 0 \end{bmatrix} \cdot \underline{x} + \begin{bmatrix} M^{-1} \\ 0 \end{bmatrix} \cdot p + \begin{bmatrix} -M^{-1} \\ 0 \end{bmatrix} \cdot \underbrace{Fg(x,\dot{x},p,t)}_{=\underline{x}} + \begin{bmatrix} M^{-1} \\ 0 \end{bmatrix} \cdot R \qquad (53)$$

Auf Basis dieses Gleichungssystems und mit Hilfe diskretisierter algebraischer Gleichungen können zu jedem gewünschten Zeitpunkt die Lasten-, Komfort- und sicherheitsrelevanten Größen direkt berechnet werden. Für die generalisierten elastische Kräfte bzw. Lasten ergibt sich dabei:

$$P_g^{el} = K_{Struktur} \, x \qquad (54)$$

wobei gemäss: $K = K_{Struktur} + K_{Aerodynamik} + K_{System}$ die Matrix $K_{Struktur}$ der reine Strukturanteil der erweiterten Steifigkeitsmatrix K ist.

Alternativ können die generalisierten elastische Kräfte bzw. Lasten mit der sogenannten Force-Summation-Methode wie folgt aus den Bewegungsgleichungen berechnet werden:

$$P_g^{el} = p - Fg(x,\dot{x},p,t) + R - M\ddot{x} - D\,\dot{x} - K_{Aerodynamik} \, x - K_{System} \, x$$
$$(55)$$

In direkter Analogie zu Gleichung (22) können durch Multiplikation mit den Modenformfunktionen $f_{i,n}$, $g_{i,n}$ und $h_{i,n}$ somit die lokalen Lasten an jedem Punkt i des Flugzeugs berechnet werden. Entsprechend den Termen $M\ddot{x} = (M_{Struktur} + M_{Aerodynamik} + M_{Systemdynamik})\ddot{x}$, $D\dot{x} = (D_{Struktur} + D_{Aerodynamik} + D_{Systemdynamik})\dot{x}$ und $K_{Aerodynamik} x$ wird deutlich, dass die Aerodynamik und insbesondere die aerodynamischen Verteilungen einen wesentlichen Beitrag zu den Lasten liefern.

Der Term, der das Rauschen R beinhaltet, kann als zustandsabhängige Matrix multipliziert mit einer zeitabhängigen Vektorfunktion $\underline{w}(t)$ angegeben werden:

$$M^{-1}R = G\{\underline{x}(t)\} \, \underline{w}(t) \qquad (56)$$

Im Allgemeinen kann das dynamische Verhalten des Systems also mittels folgender Gleichungen dargestellt werden:

$$\dot{\underline{x}}(t) = f\{\underline{x}(t), \underline{p}(t), \underline{\theta}\} + G\{\underline{x}(t)\} \, \underline{w}(t)$$
$$\underline{z}(t) = h\{\underline{x}(t), \underline{p}(t), \underline{\theta}\} + \underline{v}(t) \qquad (57)$$

wobei:

$\underline{x}(t)$ : Zustandsvektor
$\underline{p}(t)$ : Eingangsvektor
$\underline{z}(t)$ : Beobachtungsvektor
$\underline{w}(t)$ : Zustandsrauschen
$\underline{v}(t)$: Messrauschen
$G$ : Eingangsmatrix vom Prozessrauschen
$\theta$ : Parameter Vektor

Für das Prozessrauschen $\underline{w}(t)$ und für das Messrauschen $\underline{v}(t)$ kann davon ausgegangen werden, dass sie einen Mittelwert von Null aufweisen und dass sie einem weißen Rauschen entsprechen, das eine unkorrelierte Normalverteilung aufweist, wobei die Kovarianzmatrizen unbekannt sind.

Die messbaren Zustandsgrößen des realen Systems bzw. des Luftfahrzeugs lassen sich wie folgt darstellen:

$$\underline{z}(t) = h\{\underline{x}(t), \underline{p}(t), \underline{\theta}\} + \underline{v}(t) \qquad (58)$$

Die gleichen Zustandsgrößen werden in dem Simulationsmodell wie folgt beschrieben:

$$\hat{\underline{z}}_i(\underline{\theta}) = h\{\ \tilde{\underline{x}}_i\ ,\ \underline{p}_{m,i}(t),\ \underline{\theta}\} \qquad\qquad (59)$$

Daraus ergibt sich ein Stör- bzw. Differenzvektor wie folgt:

$$\hat{\underline{\eta}}_i(\underline{\theta}) = \underline{z}_{m,i} - \hat{\underline{z}}_i(\underline{\theta}) \qquad\qquad (60)$$

Bei einer Ausführungsform des erfindungsgemäßen Verfahrens und Systems wird anhand des Störvektors ein optimaler Wert für den Parametervektor, basierend auf dem Beobachtungsvektor z berechnet. Dabei sind die optimalen Werte für die Elemente des Parametervektors diejenigen, die den Störvektor minimieren. Bei einer möglichen Ausführungsform wird eine Likelihood Funktion als Kriterium für die Optimierung verwendet.

Bei einer möglichen Ausführungsform kann für die Parameteranpassung eine Hess'sche Matrix vorgesehen werden. Diese kann durch Erwartungswerte ersetzt werden, um eine sogenannte Fisher Informationsmatrix M zu bilden. Der Störvektor wird dann basierend auf einer reduzierten Pseudo-Inversen der Fisher-Informations-Matrix M minimiert.

Das erfindungsgemäße Verfahren zur Bestimmung aerodynamischer Daten kann in einer Simulationssoftware integriert sein.

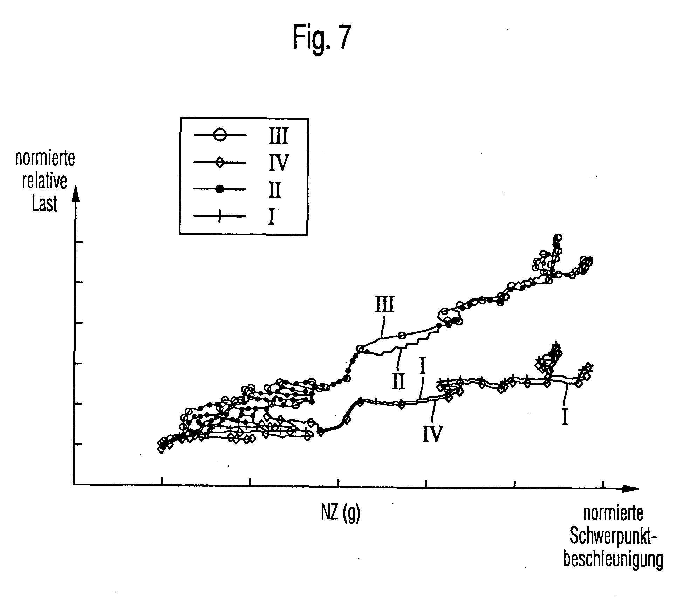

Figur 7 zeigt exemplarisch spezifische Ausgaben der Berechnungseinheit 3 auf der eine Simulationssoftware abläuft.

Figur 7 zeigt für eine normierte relative Last den Zeitverlauf gegenüber einer normierten Schwerpunktbeschleunigung, wobei die Last in einem Winglet bzw. einer Außenflügelerweiterung gegenüber der Beschleunigung am Schwerpunkt des Flugzeugs F dargestellt ist.

In Figur 7 ist ein ,Baseline model' I dargestellt, das die Modellkenntnis (zum Beispiel eines Ingenieurs) vor den Identifikation bzw. Flugerprobung enthält. Sinn der Identifikation und Flugerprobung ist es, das Modell weiterzuentwickeln bzw. zu präzisieren. Hierzu führt man entweder Parameter oder zusätzliche parametrisierte Terme in das Baseline-Modell I ein und erhält so ein erstes ,Initial Modell' IV. Diese Parameter bilden den Vektor $\underline{\theta}$.

Der Vergleich zwischen dem ,Initial Modell' IV und dem 'Messmodell' III bzw. dem realen System stellt die Ausgangsstörung dar. Diese Ausgangsstörung wird im ersten Schritt der Identifikation optimiert entsprechend einem ausgewählten Kriterium. Die freien Parameter aus dem ,Initial Modell' IV werden entsprechend angepasst und die Ergebnisse, die daraus entstehen werden wieder mit dem Messmodell III verglichen, wodurch sich neue Werte für den Störvektor ergeben. Das finale Modell II stellt das Ergebnis dar, nachdem in dem Optimierungsverfahren Konvergenz erreicht wird.

Wie man aus Figur 7 erkennen kann, entspricht der zeitliche Verlauf der normierten relativen Last entsprechend dem 'optimierten finalen Modell' II mit hoher Genauigkeit dem sensorisch erfassten Beobachtungsvektor.

Die Auswertung der Daten erfolgt bei einer möglichen Ausführungsform in Echtzeit. Bei einer alternativen Ausführungsform werden die gewonnenen Daten aufgezeichnet und zu einem späteren Zeitpunkt ausgewertet.

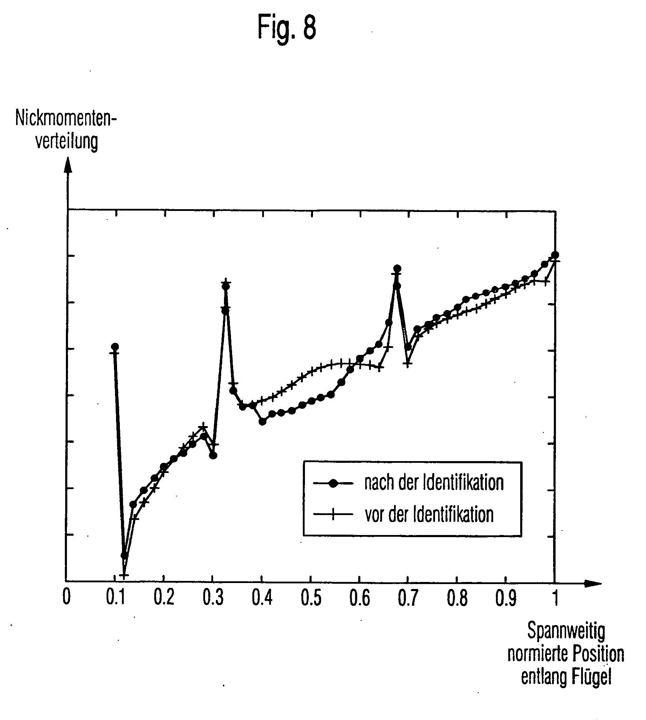

In Figur 8 sieht man beispielhaft, wie eine lokale aerodynamische Verteilung (hier Nickmomentenverteilung am Flügel infolge eines Anstellwinkels $\alpha$ bzw. einer Vertikalgeschwindigkeit $w$) in der Identifikation angepasst wurde, um die Übereinstimmung in Figur 7 zwischen Modell II und Modell III zu erreichen.

Die x-Achse repräsentiert hier die spannweitig normierte Position entlang des Flügels. Die Linie mit den Pluszeichen resultiert dabei aus dem Modell vor der Identifikation, dem sogenannten ,Initial Modell' IV. Die Linie mit den Kreisen resultiert aus dem identifizierten Modell bzw. dem ,optimierten finalen Modell' II. Die Punkte auf der einen Kurve und die Pluszeichen auf der anderen Kurve entsprechen der diskreten Beschreibung durch den Index i.

Die Erfindung schafft ein Verfahren und ein System 1 zur integrierten Bestimmung von aerodynamischen Daten und dynamischen Lastverteilungen und lokalen Beschleunigungen bei einem Luftfahrzeug, insbesondere bei einem Flugzeug, während des Fluges. An dem Luftfahrzeug sind Sensoren 2 zur direkten und indirekten Erfassung von aerodynamischen Parametern, lokalen Beschleunigung und/oder Strukturlasten des Luftfahrzeugs vorgesehen. Eine im Luftfahrzeug oder in der Bodenstation vorgesehene Berechnungseinheit 3 berechnet auf Basis eines nicht-linearen Simulationsmodells des Luftfahrzeugs die aerodynamischen Daten und dynamischen Lastverteilungen des Luftfahrzeugs in Abhängigkeit von den erfassten aerodynamischen Parametern des Luftfahrzeugs. Die Berechnung kann dabei in Echtzeit erfolgen.

**Bezugszeichenliste**

1    System zur integrierten Bestimmung von aerodynamischen Daten
2    Sensoren
3    Berechnungseinheit
4    Speicher für ein nicht-lineares Simulationsmodell

**Patentansprüche**

**1.** Verfahren zur Bestimmung von lokalen Beschleunigungen, dynamischen Lastverteilungen und aerodynamischen Daten bei einem Luftfahrzeug während des Fluges, mit den Schritten:

(a) direktes oder indirektes sensorisches Erfassen (S1) von aerodynamischen Parametern des Luftfahrzeugs mittels Sensoren (2), wobei die aerodynamischen Parameter ausgewählt sind aus der Gruppe bestehend aus: Kräften, Beschleunigungen, Drücken, Momenten, Deformationen und Dehnungen; und

(b) Berechnen (S2) von aerodynamischen Daten und dynamischen Lastverteilungen des Luftfahrzeugs auf Basis eines nicht-linearen Simulationsmodells des Luftfahrzeugs, welches einen Simulationsmodellvektor der aerodynamischen Parameter liefert, und in Abhängigkeit von den sensorisch erfassten aerodynamischen Parametern des Luftfahrzeugs mittels einer Berechnungseinheit (3), wobei die Berechnungseinheit (3) einen Störvektor für die aerodynamischen Parameter berechnet, der ein Differenzvektor zwischen einem Beobachtungsvektor der sensorisch erfassten aerodynamischen Parameter und dem Simulationsmodellvektor der aerodynamischen Parameter ist,

wobei die Berechnungseinheit (3) den berechneten Störvektor für die aerodynamischen Parameter mittels eines numerischen Optimierungsverfahrens minimiert und das nicht-lineare Simulationsmodells des Luftfahrzeugs in Abhängigkeit des minimierten berechneten Störvektors für die aerodynamischen Parameter automatisch adaptiert,

**dadurch gekennzeichnet, dass**
das numerische Optimierungsverfahren ein Maximum-Likelihood-Verfahren ist.

**2.** Verfahren nach Anspruch 1,
**dadurch gekennzeichnet,**
**dass** die Berechnungseinheit (3) Kenngrößen des Passagierkomforts, der Kabinensicherheit und Bewegungsgrößen der Aeroelastik und der Flugmechanik auf Basis des nicht-linearen Simulationsmodells in Abhängigkeit von den erfassten aerodynamischen Parametern berechnet.

**3.** Verfahren nach einem der Ansprüche 1 und 2,
**dadurch gekennzeichnet,**
**dass** stationäre aerodynamische Daten einschließlich aerodynamischer Verteilungen direkt gemessen werden und Strukturlasten und Beschleunigungen in Abhängigkeit von diesen gemessenen Daten ermittelt werden.

**4.** Verfahren nach einem der Ansprüche 1 und 2,
**dadurch gekennzeichnet,**
**dass** stationäre und instationäre aerodynamische Daten einschließlich stationärer und instationärer aerodynamischer Verteilungen direkt und indirekt gemessen und identifiziert werden und Strukturlasten und Kenngrößen des Passagierkomforts, der Kabinensicherheit in Abhängigkeit von diesen gemessenen Daten.

**5.** Verfahren nach einem der Ansprüche 1 und 2,
**dadurch gekennzeichnet,**
**dass** ein Teil der stationären aerodynamischen Daten, der Strukturlasten und der Beschleunigungen direkt gemessen werden und in Abhängigkeit von diesen gemessenen Daten die nicht gemessenen aerodynamischen Daten, Strukturlasten und Beschleunigungen ermittelt werden und die zugehörigen Simulationsmodelle validiert und erweitert werden.

**6.** Verfahren nach einem der Ansprüche 1 und 2,

**dadurch gekennzeichnet,**

**dass** ein Teil der stationären und instationären aerodynamischen Daten, der Strukturlasten und der Beschleunigungen direkt gemessen werden und in Abhängigkeit von diesen gemessenen Daten die nicht gemessenen stationären und instationären aerodynamischen Daten, Strukturlasten und Beschleunigungen ermittelt werden und die zugehörigen Simulationsmodelle validiert erweitert werden.

7. Verfahren nach einem der Ansprüche 1 und 2,
   **dadurch gekennzeichnet,**
   **dass** die Berechnung der aerodynamischen Daten und der dynamischen Lastverteilungen sowie der Kenngrößen des Passagierkomforts, der Kabinensicherheit und der Bewegungsgrößen der Aeroelastik und der Flugmechanik durch die Berechnungseinheit (3) in Echtzeit erfolgt.

8. Verfahren nach einem der Ansprüche 1 bis 7,
   **dadurch gekennzeichnet,**
   **dass** die aerodynamischen Parameter und/oder die Strukturlasten sensorisch über Drücke erfasst werden.

9. Verfahren nach einem der Ansprüche 1 bis 7,
   **dadurch gekennzeichnet,**
   **dass** die aerodynamischen Parameter und/oder die Strukturlasten sensorisch durch die Deformationen von Baukomponenten oder durch auf Baukomponenten einwirkende mechanische Kräfte erfasst werden.

10. Verfahren nach einem der Ansprüche 1 bis 8,
    **dadurch gekennzeichnet,**
    **dass** das nicht-lineare Simulationsmodell in einem Speicher (4) gespeichert ist.

11. Verfahren nach einem der Ansprüche 1 bis 10,
    **dadurch gekennzeichnet,**
    **dass** das gespeicherte nicht-lineare Simulationsmodell nicht-lineare Differenzialgleichungen aufweist.

12. Verfahren nach Anspruch 2,
    **dadurch gekennzeichnet,**
    **dass** die durch die Berechnungseinheit (3) berechneten Kenngrößen des Passagierkomforts Beschleunigungsvektoren an Passagiersitzen innerhalb einer Passagierkabine des Luftfahrzeugs und einen Beschleunigungsvektor an einem Schwerpunkt des Luftfahrzeugs umfassen.

13. Verfahren nach einem der Ansprüche 1 bis 10,
    **dadurch gekennzeichnet,**
    **dass** ein physikalischer Beobachter auf Basis der ermittelten aerodynamischen Daten aufgebaut wird, wobei der physikalische Beobachter mit minimalem Validierungsaufwand zur Strukturlastüberwachung bei einem Serien-Luftfahrzeug eingesetzt wird.

14. Computerprogramm mit Programmbefehlen zur Durchführung des Verfahrens nach Anspruch 1 bis 13.

15. Datenträger, der das Computerprogramm nach Anspruch 14 speichert.

**Claims**

1. Method for determining local accelerations, dynamic load distributions and aerodynamic data in an aircraft during flight, comprising the steps of:

   (a) directly or indirectly sensor-detecting (S1) aerodynamic parameters of the aircraft using sensors (2), the aerodynamic parameters of the aircraft being selected from the group consisting of: forces, accelerations, pressures, moments, deformations and expansions; and
   (b) calculating (S2) aerodynamic data and dynamic load distributions of the aircraft on the basis of a non-linear simulation model of the aircraft, which provides a simulation model vector for the aerodynamic parameters, and as a function of the sensor-detected aerodynamic parameters of the aircraft, by means of a calculation unit (3), the calculation unit (3) calculating an interference vector for the aerodynamic parameters, which is a difference vector between an observed vector of the sensor-detected aerodynamic parameter and the simulation model vector of the aerodynamic parameter,

the calculation unit (3) minimising the calculated interference vector for the aerodynamic parameters by a numerical optimisation method and adapting the non-linear simulation model of the aircraft as a function of the minimised calculated interference vector for the aerodynamic parameters,

**characterised in that** the numerical optimisation method is a maximum likelihood method.

2. Method according to claim 1, **characterised in that** the calculation unit (3) calculates characteristic values for passenger comfort, cabin safety and movement variables of the aeroelastics and flight mechanics as a function of the detected aerodynamic parameters on the basis of the non-linear simulation model.

3. Method according to either claim 1 or claim 2, **characterised in that** stationary aerodynamic data, including aerodynamic distributions, are measured directly, and structural loads and accelerations are determined as a function of these measured data.

4. Method according to either claim 1 or claim 2, **characterised in that** stationary and non-stationary aerodynamic data, including stationary and non-stationary aerodynamic distributions, are directly and indirectly measured and identified, and structural loads and characteristic values for passenger comfort, cabin safety as a function of these measured data.

5. Method according to either claim 1 or claim 2, **characterised in that** some of the stationary aerodynamic data, structural loads and accelerations are directly measured, and, as a function of these measured data, the aerodynamic data, structural loads and accelerations which are not measured are determined and the associated simulation models are validated and expanded.

6. Method according to either claim 1 or claim 2, **characterised in that** some of the stationary and non-stationary aerodynamic data, structural loads and accelerations are directly measured, and, as a function of these measured data, the stationary and non-stationary aerodynamic data, structural loads and accelerations which are not measured are determined and the associated simulation models are validated and expanded.

7. Method according to either claim 1 or claim 2, **characterised in that** the aerodynamic data and dynamic load distributions and the characteristic values for passenger comfort, cabin safety and movement variables of the aeroelastics and flight mechanics are calculated by the calculation unit (3) in real time.

8. Method according to any of claims 1 to 7, **characterised in that** the aerodynamic parameters and/or structural loads are sensor-detected by way of pressures.

9. Method according to any of claims 1 to 7, **characterised in that** the aerodynamic parameters and/or structural loads are sensor-detected by way of the deformations of structural components or by way of mechanical forces acting on structural components.

10. Method according to any of claims 1 to 8, **characterised in that** the non-linear simulation model is stored in a memory (4).

11. Method according to any of claims 1 to 10, **characterised in that** the stored non-linear simulation model comprises non-linear differential equations.

12. Method according to claim 2, **characterised in that** the characteristic values for passenger comfort which are calculated by the calculation unit (3) include acceleration vectors at passenger seats within a passenger cabin of the aircraft and an acceleration vector at the centre of gravity of the aircraft.

13. Method according to any of claims 1 to 10, **characterised in that** a physical observer is constructed on the basis of the determined aerodynamic data, the physical observer being used with minimum validation complexity for structural monitoring in a series aircraft.

14. Computer program comprising program commands for carrying out the method according to any of claims 1 to 13.

**15.** Data medium storing the computer program according to claim 14.

**Revendications**

**1.** Procédé pour déterminer des accélérations locales, des répartitions de charge dynamiques et des données aérodynamiques sur un aéronef pendant le vol, comportant les étapes de :

(a) détection (S1) directe ou indirecte de paramètres aérodynamiques de l'aéronef au moyen de capteurs (2), les paramètres aérodynamiques étant choisi parmi le groupe constitué de : forces, accélérations, pressions, couples, déformations et extensions ; et
(b) calcul (S2) de données aérodynamiques et de répartitions de charge dynamiques de l'aéronef sur la base d'un modèle de simulation non linéaire de l'aéronef, qui fournit un vecteur de modèle de simulation des paramètres aérodynamiques, et en fonction des paramètres aérodynamiques détectés par capteurs au moyen d'une unité de calcul (3),
l'unité de calcul (3) calculant un vecteur de perturbation pour les paramètres aérodynamiques, qui est un vecteur de différence entre un vecteur d'observation des paramètres aérodynamiques détectés par capteurs et le vecteur de modèle de simulation des paramètres aérodynamiques,
l'unité de calcul (3) minimisant le vecteur de perturbation calculé pour les paramètres aérodynamiques au moyen d'un procédé d'optimisation numérique et adaptant automatiquement le modèle de simulation non linéaire en fonction du vecteur de perturbation calculé minimisé pour les paramètres aérodynamiques,

**caractérisé par le fait que** le procédé d'optimisation numérique est un procédé de la vraisemblance maximale.

**2.** Procédé selon la revendication 1, **caractérisé par le fait que** l'unité de calcul (3) calcule des grandeurs du confort des passagers, de la sécurité de la cabine et des grandeurs de mouvement de l'aérodistorsion et de la mécanique de vol sur la base du modèle de simulation non linéaire en fonction des paramètres aérodynamiques détectés.

**3.** Procédé selon l'une des revendications 1 et 2, **caractérisé par le fait que** des données aérodynamiques fixes y compris des répartitions aérodynamiques sont mesurées directement et des charges de structure et des accélérations sont déterminées en fonction de ces données mesurées.

**4.** Procédé selon l'une des revendications 1 et 2, **caractérisé par le fait que** des données aérodynamiques fixes et non fixes y compris des répartitions aérodynamiques fixes et non fixes sont mesurées et identifiées directement et indirectement et des charges de structure et des grandeurs du confort des passagers, de la sécurité de la cabine sont déterminées en fonction de ces données mesurées.

**5.** Procédé selon l'une des revendications 1 et 2, **caractérisé par le fait qu'**une partie des données fixes aérodynamiques, des charges de structure et des accélérations est mesurée directement et, en fonction de ces données mesurées, les données aérodynamiques, les charges de structure et les accélérations non mesurées sont déterminées et les modèles de simulation associés sont validés et étendus.

**6.** Procédé selon l'une des revendications 1 et 2, **caractérisé par le fait qu'**une partie des données aérodynamiques fixes et non fixes, des charges de structure et des accélérations est mesurée directement et, en fonction de ces données mesurées, les données aérodynamiques mesurées fixes et non fixes, les charges de structure et les accélérations non mesurées sont déterminées et les modèles de simulation associés sont validés et étendus.

**7.** Procédé selon l'une des revendications 1 et 2, **caractérisé par le fait que** le calcul des données aérodynamiques et des répartitions de charge dynamiques ainsi que des grandeurs du confort des passagers, de la sécurité de la cabine et des grandeurs de mouvement de l'aérodistorsion et de la mécanique de vol a lieu en temps réel au moyen de l'unité de calcul (3).

**8.** Procédé selon l'une des revendication 1 à 7, **caractérisé par le fait que** les paramètres aérodynamiques et/ou les charges de structure sont détectés par capteurs par l'intermédiaire de pressions.

**9.** Procédé selon l'une des revendication 1 à 7, **caractérisé par le fait que** les paramètres aérodynamiques et/ou les charges de structure sont détectés par capteurs par les déformations de composants ou par des forces mécaniques appliquées sur des composants.

**10.** Procédé selon l'une des revendication 1 à 8, **caractérisé par le fait que** le modèle de simulation non linéaire est enregistré dans une mémoire (4).

**11.** Procédé selon l'une des revendication 1 à 10, **caractérisé par le fait que** le modèle de simulation non linéaire enregistré présente des équations différentielles non linéaires.

**12.** Procédé selon la revendication 2, **caractérisé par le fait que** les grandeurs du confort des passagers calculées par l'unité de calcul (3) comprennent des vecteurs d'accélération au niveau de sièges passagers à l'intérieur d'une cabine de passagers de l'aéronef et un vecteur d'accélération au niveau d'un centre de gravité de l'aéronef.

**13.** Procédé selon l'une des revendication 1 à 10, **caractérisé par le fait qu'**un observateur physique est établi sur la base des données aérodynamiques déterminées, l'observateur physique étant utilisé avec un effort de validation minimal pour la surveillance de charges de structure sur un aéronef de série.

**14.** Programme informatique comportant des instructions de programme pour la réalisation du procédé selon les revendications 1 à 13.

**15.** Support de données qui enregistre le programme informatique selon la revendication 14.

Fig. 1

## Fig. 2

nicht-lineare
Simulationsmodell

Sensoren → Berechnungseinheit → aerodynamische Daten und
dynamische Lastverteilungen

## Fig. 3

Erfassen von
aerodynamischen
Parametern — S1

Berechnen von
aerodynamischen
Daten und dynamischen
Lastverteilungen — S2

Fig. 4

## Fig. 5A

$$M\ddot{x} \quad + \quad D\dot{x} \quad + \quad Kx \quad + \quad Fg\,(x, \dot{x}, p, t) \quad = p + R$$

## Fig. 5B

$$\left\{\begin{array}{l} M : \text{Erweiterte Massenmatrix} \\[1em] D : \text{Erweiterte Dämpfungsmatrix} \\[1em] K : \text{Erweiterte Steifigkeitsmatrix} \\ \vdots \qquad \vdots \end{array}\right\} =$$

| Flug-mechanik | Kopplung |
| --- | --- |
| Kopplung | Reine Aeroelastik |

# Fig. 6A

Spezialfall 1.) Integrales Modell → Standard-Aeroelastik

$$M\ddot{x} \quad + \quad D\dot{x} \quad + \quad Kx \quad + \quad Fg\,(x,\dot{x},p,t) \quad = p + R$$

$$= 0$$

# Fig. 6B

Spezialfall 2.) Integrales Modell → Analyse Standardböe

$$M\ddot{x} \quad + \quad D\dot{x} \quad + \quad Kx \quad + \quad Fg\,(x,\dot{x},p,t) \quad = p + R$$

## Fig. 6C

Spezialfall 3.) Integrales Modell → Manöverlastenanalyse

$$M\ddot{x} + D\dot{x} + Kx + Fg(x, \dot{x}, p, t) = p + R$$

## Fig. 6D

Spezialfall 4.) Integrales Modell → Analyse der nichtlinearen Böe, der Sicherheit, des Komforts (und Fehlerfälle)

$$M\ddot{x} + D\dot{x} + Kx + Fg(x, \dot{x}, p, t) = p + R$$

# Fig. 7

# Fig. 8

Nickmomenten-verteilung

**nach der Identifikation**

**vor der Identifikation**

Spannweitig
normierte Position
entlang Flügel

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005058081 A1